(19) Europäisches Patentamt

European Patent Office

Office européen des brevets

(11) **EP 4 439 216 A1**

(12) **EUROPEAN PATENT APPLICATION**

(43) Date of publication:
**02.10.2024 Bulletin 2024/40**

(21) Application number: **24162175.4**

(22) Date of filing: **07.03.2024**

(51) International Patent Classification (IPC):
**G05B 23/02** (2006.01)

(52) Cooperative Patent Classification (CPC):
**G05B 23/0283;** G06Q 10/20

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(30) Priority: **09.03.2023 US 202363451171 P
05.03.2024 US 202418595977**

(71) Applicant: **Cummins Power Generation Inc.
Minneapolis, MN 55432 (US)**

(72) Inventors:
• **Halbe, Mayura
Columbus, 47201 (US)**
• **O Connor, Daniel J.
Columbus, 47201 (US)**
• **Anderson, Alan C.
Columbus, 47203 (US)**
• **Joshi, Sachin
Columbus, 47201 (US)**
• **Bakthavatsalam, Pagalavan Mathari
Columbus, 47201 (US)**
• **Christianson, Renae
Columbus, 47201 (US)**
• **Zimmerman, Adam
Columbus, 47201 (US)**
• **Cover, William Marshall
Columbus, 47201 (US)**

(74) Representative: **CSY London
Helios Court
1 Bishop Square
Hatfield
Hertfordshire AL10 9NE (GB)**

(54) **SYSTEMS AND METHODS FOR GENERATING A SERVICE RECOMMENDATION**

(57) A method includes: receiving system data corresponding to an engine system. The system data includes a plurality of remaining useful life (RUL) values with each RUL value associated with a component of the engine system. The method further includes: comparing a first RUL value to a service interval threshold; generating a near-term service recommendation including a first list of components that correspond to each RUL value that are less than or equal to the service interval threshold; generating an extended term service recommendation including a second list of components and a downtime prediction; generating a coordinated service recommendation by dynamically populating one or more fields of the coordinated service recommendation based on the near-term service recommendation and the extended term service recommendation; and providing the combined service recommendation to a user device.

FIG. 4

**Description**

CROSS-REFRENCE SECTION TO RELATED APPLICATION

This U.S. Patent Application claims priority to U.S. Provisional Application No. 63/451,171, filed March 9, 2023, which is incorporated herein by reference in its entirety.

TECHNICAL FIELD

The present disclosure relates to systems, methods, and computer-readable media for generating a service recommendation for an engine system. In various embodiments, the engine system may be embodied in a stationary piece of equipment, such as a generator set (genset), a vehicle, or in other types of implementations.

BACKGROUND

An engine system can be embodied in a stationary piece equipment, such as a genset, and used for power generation. An engine system can include a prime mover, such as an internal combustion engine (ICE) that converts fuel into mechanical energy to rotate a generator (e.g., an alternator). Routine maintenance performed too frequently leads to repairing and/or replacing a component(s) prematurely (e.g., before the end of a remaining useful life of the component). Alternatively, routine maintenance performed too infrequently leads to a component(s) reaching the end of its useful life before a maintenance event.

SUMMARY

One embodiment relates to a method including receiving, by at least one processing circuit of a computing system, system data corresponding to an engine system. The system data includes a plurality of remaining useful life (RUL) values. Each RUL value of the plurality of RUL values associated with a component or system of the engine system. The method also includes determining, by the at least one processing circuit, that a first RUL value of the plurality of RUL values is less than a service interval threshold. The method also includes generating, by the at least one processing circuit, a near-term service recommendation including a first component that corresponds to the first RUL value. The method also includes determining, by the at least one processing circuit, that a second RUL value of the plurality of RUL values is greater than the service interval threshold. The method also includes generating, by the at least one processing circuit, an extended term service recommendation including a second component that corresponds to the second RUL value. The method also includes generating, by the at least one processing circuit, a coordinated service recommendation by dynamically populating one or more fields of the coordinated service recommendation based on the near-term service recommendation and the extended term service recommendation. The method also includes providing, by the at least one processing circuit, the coordinated service recommendation to a user device.

In some embodiments, the method includes receiving, by the at least one processing circuit, duty cycle information associated with a third component, the third component corresponding to a third RUL value of the plurality of RUL values. In some embodiments, the duty cycle information includes a run time of the third component. In some embodiments, the method includes determining, by the at least one processing circuit, a total life value for the third component based on an aggregate of the run time and the third RUL value. In some embodiments, the method includes determining, by the at least one processing circuit, a degradation value up to a planned service event based on the total life value relative to the third RUL value. In some embodiments, dynamically populating the one or more fields of the coordinated service recommendation includes populating a degradation field with the degradation value.

In some embodiments, the method includes receiving, by the at least one processing circuit, information regarding the planned service event including an engine hour value corresponding to the planned service event, a list of components planned to be serviced during the planned service event, and a predicted downtime during the planned service event, the predicted downtime based on the list of components. In some embodiments, the method includes generating, by the at least one processing circuit, a first group of RUL values of the plurality of RUL values, each RUL value of the first group of RUL values within a predetermined threshold of the engine hour value, the first group of RUL values including at least the third RUL value.

In some embodiments, the method includes including the first group of RUL values in the near-term service recommendation responsive to determining that each RUL value in the first group of RUL values is less than the service interval threshold.

In some embodiments, the method includes including the first group of RUL values in the extended term service recommendation responsive to determining that each RUL value in the first group of RUL values is greater than the service interval threshold.

In some embodiments, dynamically populating the one or more fields of the coordinated service recommendation includes populating a recommendation field with a recommendation to service a set of components. The set of components includes at least the third component.

In some embodiments, the method includes generating, by the at least one processing circuit, a downtime prediction based on a downtime value of the second component. In some embodiments, the extended term service recommendation further includes the downtime prediction.

In some embodiments, the method includes receiving, by the at least one processing circuit, a first near-term group of RUL values responsive to determining that the first RUL value is less than or equal to the service interval threshold. The near-term service recommendation further includes a first list of components that correspond to each RUL value in the first near-term group of RUL values.

In some embodiments, the method includes receiving, by the at least one processing circuit, a first extended term group of RUL values responsive to determining that the second RUL value of the plurality of RUL values is greater than the service interval threshold. In some embodiments, the extended term service recommendation further includes a second list of components that correspond to each RUL value in the first extended term group of RUL values.

Another embodiment relates to a computing system. The computing system includes a processing circuit having one or more processors and memory storing instructions that, when executed by the one or more processors, cause the one or more processors to perform operations. The operations include receiving system data corresponding to a plurality of engine systems. The system data including one or more remaining useful life (RUL) values. The operations also include determining a priority value for each of the plurality of engine systems. The operations also include generating a service recommendation by dynamically populating one or more fields of the service recommendation. The one or more fields including an ordered list of engine systems of the plurality of engine systems according to the priority value. The operations also include providing the service recommendation to a user device.

In some embodiments, the operations include populating the one or more fields of the service recommendation with an indication of parts needed to complete a service event.

In some embodiments, a first priority value for a first engine system of the plurality of engine systems is based on an age of first engine system, a total run time for a first component of the first engine system, and a RUL value for the first component of the first engine system.

In some embodiments, the first priority value is further based on a second priority value of a second engine system, the second engine system located proximate the first engine system, and a difference between the first priority value and the second priority value at or below a predetermined threshold.

In some embodiments, the operations include determining a predicted downtime value for a first engine system of the plurality of engine systems based on predicted downtimes of engine systems having higher priority values than the first engine system.

In some embodiments, the predicted downtime value is further based on a set of components that are recommended to be serviced, a travel time for the first engine system, a travel time for a technician, and a delivery time for service parts, such that the predicted downtime value for the first engine system is an aggregate of one or more of a service time for the set of components, the travel time for the first engine system, the travel time for the technician, the delivery time for service parts, and the predicted downtimes of engine systems having a higher priority value than the first engine system.

Another embodiment relates to a non-transitory computer-readable media storing instructions that, when executed by one or more processors, cause the one or more processors to perform operations. The operations include receiving component data for each component of a plurality of components of an engine system. The component data includes a remaining useful life (RUL) value, a cost value, and a life value. The operations include determining a component cost per operating time based on the cost value and the life value for each component of the plurality of components. The operations include determining a minimum RUL value of the component data. The operations include determining a dynamic service interval based on the minimum RUL value. The dynamic service interval defines a first service event. The operations include determining a minimum RUL cost value for each component of the plurality of components based at least in part on the component cost per operating time and the minimum RUL value. The operations include determining a total cost of the first service event based on a predicted downtime of the first service event. The operations include comparing the minimum RUL cost value for each component to a threshold value. The threshold value is based on the total cost of the first service event. The operations include including a first component of the plurality of components in a coordinated service recommendation responsive to determining that the minimum RUL cost value of the first component is less than or equal to the threshold value. The operations include excluding a second component from the coordinated service recommendation responsive to determining that the minimum RUL cost value of the first component is greater than the threshold value. The operations include generating the coordinated service recommendation including dynamically populating one or more fields of the coordinated service recommendation to include the first component. The operations include providing the coordinated service recommendation to a user device.

In some embodiments, the total cost of the first service event is further based on an opportunity cost of the predicted downtime of the first service event, an opportunity cost of unused RUL time, a cost of components and materials for the first service event, and a cost of service charges for the first service event.

In some embodiments, the minimum RUL cost value is equal to the component cost per time multiplied by the minimum RUL value.

In some embodiments, the dynamic service interval is further based on a difference between a current time and a time of the first service event.

In some embodiments, the operations further include receiving duty cycle information regarding the engine system. The duty cycle information includes a current engine hours value and an average engine hours per day value. The operations further include determining a number of calendar days between a current date and a date of the first service event based on the dynamic service interval, the current engine hours value, and the average engine hours per day value.

This summary is illustrative only and is not intended to be in any way limiting. Other aspects, inventive features, and advantages of the devices or processes described herein will become apparent in the detailed description set forth herein, taken in conjunction with the accompanying figures, wherein like reference numerals refer to like elements.

BRIEF DESCRIPTION OF THE DRAWINGS

FIG. 1 is a schematic diagram of an engine system, according to an example embodiment.

FIG. 2 is a schematic diagram of an engine system, according to another example embodiment.

FIG. 3 is a block diagram of a system for generating a service recommendation, according to an example embodiment.

FIG. 4 is a flow diagram illustrating a method of generating a coordinated service recommendation, according to an example embodiment.

FIG. 5 is a flow diagram illustrating a method of generating an extended interval service recommendation, according to an example embodiment.

FIG. 6 is a flow diagram illustrating a method of generating an extended interval service recommendation, according to another example embodiment.

FIG. 7 is a flow diagram illustrating a method of generating an extended interval service recommendation, according to yet another example embodiment.

FIG. 8 is an illustration of a first user-readable coordinated service recommendation, displayable on a user interface, according to an example embodiment.

FIG. 9 is an illustration of a second user-readable coordinated service recommendation, displayable on a user interface, according to an example embodiment.

FIGS. 10A and 10B are illustrations of a third user-readable coordinated service recommendation, displayable on a user interface, according to an example embodiment.

FIG. 11 is an illustration of another user-readable coordinated service recommendation, displayable on a user interface, according to an example embodiment.

DETAILED DESCRIPTION

Following below are more detailed descriptions of various concepts related to, and implementations of, systems, methods, and computer-readable media for generating a service recommendation. In some embodiments, a two or more service recommendations may be used to generate a coordinated service recommendation. Before turning to the figures, which illustrate certain exemplary embodiments in detail, it should be understood that the present disclosure is not limited to the details or methodology set forth in the description or illustrated in the figures. It should also be understood that the terminology used herein is for the purpose of description only and should not be regarded as limiting.

In some embodiments, the term "predicting" and like terms can refer to determining or estimating a future value or state based on data (e.g., sensor data, historical sensor data, real-time sensor data, etc.). In some embodiments, predicting the future value can be performed using one or more models (e.g., statistical models, artificial intelligence models, machine learning models, etc.). For example, predicting a remaining useful life of a spark plug can include using data, such as sensor data, with a model to determine a future breakdown voltage value.

In some embodiments, a "duty cycle" can refer to a repeatable set of data, values, or information indicative of how a system, such as a vehicle, a generator set ("gen set"), or other system is being utilized for a particular application. In particular, a "duty cycle" can refer to a repeatable set of operations for a particular event or for a predefined time period. For example, a "duty cycle" may refer a repeatable set of values indicative of an engine output (e.g., engine speed, engine torque, engine power) for a given time period. The values may include operational data and/or operational parameters. For example, the values may be indicative of the engine experiencing certain load conditions, such as being above or below a predefined low-load threshold value. In still another example, a "duty cycle" may refer to a time period values indicative of when the system or engine is being used compared to a time period when the system or engine is idling or off. "Engine hours" can refer to the number of hours that an engine is being used. Beneficially and based on the foregoing, the "duty cycle" may be representative of how a system, such as a vehicle, a gen set, etc., may operate in a particular setting, circumstance, and/or environment. For example, for vehicle application, a duty cycle may be representative of how the vehicle operates in settings, circumstances, and/or environments, such as a seventy-file mile stretch of a relatively flat freeway environment, a dirt or gravel road, a construction site, city streets, etc.). In this regard, the duty cycle may vary greatly based on the system configuration (e.g., a two-door sedan vehicle versus a concrete mixer truck versus a refuse truck, a stationary gen set operating as a prime power source versus a stationary gen set operating as a backup power generator, etc.). As an example, when an engine system is embodied in a vehicle (e.g., as a "prime mover"), a duty cycle may refer to an amount of time the engine system is providing power to move the vehicle versus the time that the engine is not providing power to move the vehicle or is at idle. As another example, when an engine system is embodied in a stationary piece of equipment, such as power generation or generator set (i.e., "genset"), a duty cycle may refer to an amount of time the genset is providing power versus the time that the genset is not providing power, which can based upon demand. "Genset hours" can refer to the number of hours that a genset is providing power. Further, in some implementations (e.g., in some stationary applications), the duty cycle may refer to a magnitude of energy load demand on the genset at various times throughout the day, also based upon demand, and measured in watts, kilowatts, horsepower, or another unit of power. It should be understood that a duty cycle may vary based on the use profile or application of the genset. For example, in a prime power application, a genset may provide power at 80-90% load for up to 24 hours per day, while, in a standby application, a genset may only run during a grid outage. Thus, it should be understood that a duty cycle may vary based on the use profile or application of the system.

Referring to the Figures generally, the various embodiments disclosed herein relate to systems, methods, and computer-readable media for generating a service recommendation. In particular, the embodiments disclosed herein relate to systems, methods, and computer-readable media for generating a service recommendation for an engine system. In some embodiments, the engine system is embodied in a generator set (referred to herein as a genset). In some embodiments, the engine system is embodied in a vehicle.

In some embodiments, the systems, methods, and computer-readable media described herein can provide an improved control system that provides a technical improvement to the field of data analysis and, in particular, the field of analyzing data for use in generating repair/service recommendations. In some embodiments, the systems, methods, and computer-readable media described herein can advantageously use a multi-factor approach to generate a service recommendation for an engine system (which may be embodied in a vehicle and/or stationary piece of equipment, such as a genset). The multi-factor approach can include generating the service recommendation based on a remaining useful life (RUL) of one or more components of the engine system and at least one other factor or criteria as described herein. The other factors can include a RUL of another component, a cost analysis of the component, and/or an analysis of other engine systems. In some embodiments, the generated service recommendation can result in an alignment of service intervals at a fleet service site for a fleet of equipment. In some embodiments, the use of a RUL and an additional factor can improve the generated service recommendation by decreasing engine system downtime by optimizing service intervals for a variety of components of one or a plurality of engine systems. For example, decreasing the engine system downtime can include reducing the number of service events for an engine system before an issue that would have caused downtime occurs. Further advantages of using a RUL and an additional factor can include improving service efficiency by prioritizing certain engine systems over other engine systems.

In some embodiments, the systems, methods, and computer-readable media described herein provide an improved control system that provides improvements in data analysis for generating a service recommendation that are beyond what is well-understood, routine, or conventional. In particular, the repair/service recommendation is based on a RUL and another factor which can result in larger bandwidth data transfers between an engine system and a computing system. Thus, in some embodiments, the systems, methods, and computer-readable media described herein may utilize additional computing resources (e.g., network bandwidth, processing power to intake the additional data, etc.) such that some of the solutions described herein may be counter to routine or conventional tasks of attempting to minimize the use of computing resources (e.g., memory occupancy limits). Moreover, in some embodiments, the use of real-time data values (e.g., repair site availability, real-time component costs, equipment-specific parameters such as an age and an operating time of the equipment or a component thereof, etc.) may result in increased data transmissions and more memory occupancy. However, in some embodiments, the systems, methods, and computer-readable media may provide improved service/repair recommendations that advantageously reduce engine system downtime and/or improving service efficiency by using a robust, multi-factor approach that uses a wide range of data, described herein, to generate the improved service recommendation.

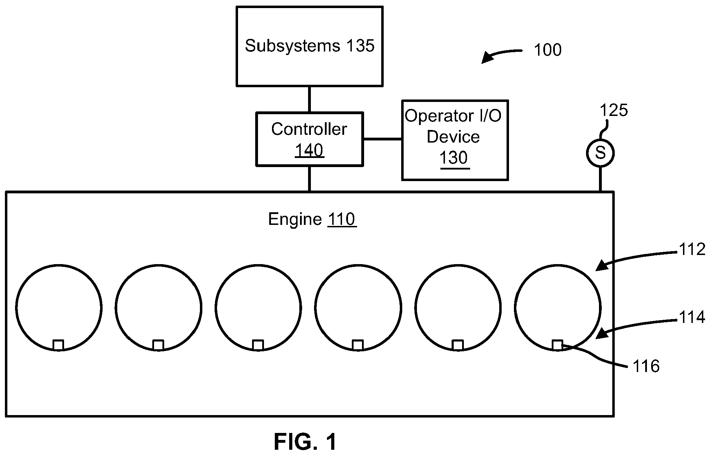

Referring now to FIG. 1, a schematic diagram of an engine system 100 is shown, according to an example embodiment. The engine system 100 includes an engine 110, an operator input/output (I/O) device 130, one or more subsystems 135, and a controller 140, where the controller 140 is communicably coupled to each of the aforementioned components. In the embodiment shown, the engine system 100 is embodied as a part of a stationary piece of equipment, and particularly a genset. In other embodiments, the engine system 100 is included in a vehicle. The vehicle can be any type of on-road or off-road vehicle including, but not limited to, wheel-loaders, fork-lift trucks, line-haul trucks, mid-range trucks (e.g., pick-up truck, etc.), sedans, coupes, tanks, airplanes, boats, and any other type of vehicle. All such variations are intended to fall within the scope of the present disclosure.

In some embodiments, the engine 110 can be any type of internal combustion engine. The engine 110 can be fueled by gasoline, natural gas, hydrogen, propane, diesel fuel, or another type of fuel. In some embodiments, the engine 110 can be a part of a hybrid engine system (e.g., a combination of an internal combustion engine and one or more electric motors). In some embodiments, the engine 110 is configured as a spark-ignition (SI) engine. In other embodiments, the engine 110 is configured as a compression-ignition (CI) engine. In the example depicted, the engine 110 is a spark-ignition engine.

The engine 110 can include one or more cylinders 112. As shown in FIG. 1, the engine 110 includes six cylinders 112. However, it should be understood that the engine 110 can include more or fewer cylinders 112 (e.g., 4 cylinders, 8 cylinders, 12 cylinders, etc.). Further, the cylinders 112 can be arranged in any cylinder configuration (e.g., inline arrangement, V-arrangement, etc.). As shown, each cylinder 112 can include an ignition system 114. The ignition systems 114 each include an ignition assist device and, particularly, a spark plug 116. It should be understood that, in other embodiments, the engine 110 may not include spark plugs (e.g., when the engine 110 is configured as a compression-ignition engine).

As shown, one or more sensors 125 are included in the engine system 100. The number, placement, and type of sensors included in the engine system 100 is shown for example purposes only. That is, in other configurations, the number, placement, and type of sensors can differ. For example, the sensors 125 can be located in or proximate the engine 110, upstream of the engine 110 and/or downstream of the engine 110. It should be understood that the location of the sensors can vary. The sensors 125 can be engine sensors configured to detect and/or determine one or more parameters of the engine 110, such as an engine torque, an engine power, an engine speed (e.g., in rotations per minute), an engine exhaust gas value (e.g., engine exhaust manifold pressure, an exhaust temperature, etc.). Additional sensors can be included with the engine system 100. The sensors can include sensors associated with other components of the engine system 100, such as the subsystems 135.

The sensors 125 can be real or virtual (i.e., a non-physical sensor that is structured as program logic in the controller 140 that makes various estimations or determinations). For example, an engine speed sensor can be a real or virtual sensor arranged to measure or otherwise acquire data, values, or information indicative of a speed of the engine 110 (typically expressed in revolutions-per-minute). The sensor 125 is coupled to the engine (when structured as a real sensor) and is structured to send a signal to the controller 140 indicative of the speed of the engine 110. When structured as a virtual sensor, at least one input can be used by the controller 140 in an algorithm, model, lookup table, etc. to determine or estimate a parameter of the engine (e.g., power output, etc.). Any of the sensors 125 described herein can be real or virtual.

The controller 140 is communicably coupled to the sensors 125. Accordingly, the controller 140 is structured to receive data from one more of the sensors 125. The received data can be used by the controller 140 to control one or more components in the engine system 100 and/or for estimation and forecasting purposes.

The operator I/O device 130 can be coupled to the controller 140, such that information can be exchanged between the controller 140 and the I/O device 130, wherein the information can relate to one or more components of FIG. 1 or determinations (described below) of the controller 140. The operator I/O device 130 enables an operator or attendant of the engine system 100 to communicate with the controller 140 and one or more components of the engine system 100 of FIG. 1. For example, the operator input/output device 130 can include, but is not limited to, an interactive display, a touchscreen device, one or more buttons and switches, voice command receivers, etc. In this way, the operator input/output device 130 can provide one or more indications or notifications to an operator, such as a malfunction indicator lamp (MIL), etc. Additionally, the vehicle can include a port that enables the controller 140 to connect or couple to a scan tool so that fault codes and other information regarding the vehicle can be obtained.

The subsystems 135 can include one or more components, systems, and/or devices included with the vehicle, such as mechanically driven or electrically driven vehicle components. The subsystems 135 can include, but are not limited to, an HVAC system, lights, pumps, fans, and so on.

In some embodiments, the subsystems 135 also include one or more components positioned downstream of the engine 110 and configured to receive exhaust output by the engine 110. In some embodiments, the engine system 100 includes a turbocharger configured to receive exhaust output by the engine 110 and compress intake fluid (e.g., air, etc.) provided to the engine 110. In some embodiments, the engine system 100 includes an aftertreatment system having components used to convert exhaust emissions, such as selective catalytic reduction (SCR) catalyst, a diesel oxidation catalyst (DOC), a particulate filter (PF), an exhaust fluid dosing module with a supply of exhaust fluid, a plurality of sensors for monitoring the aftertreatment system (e.g., a nitrogen oxide (NOx) sensor, temperature sensors, etc.), and/or still other components.

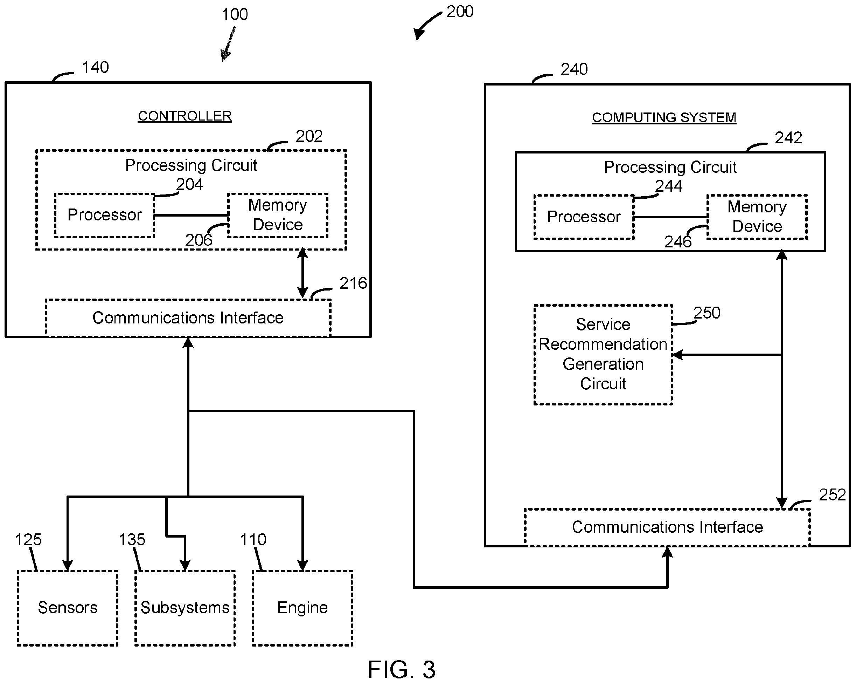

The controller 140 is structured to control, at least partly, the operation of the engine system 100 and associated sub-systems, such as the engine 110 and the operator input/output (I/O) device 130. Communication between and among the components can be via any number of wired or wireless connections. For example, a wired connection can include a serial cable, a fiber optic cable, a CAT5 cable, or any other form of wired connection. In comparison, a wireless connection can include the Internet, Wi-Fi, cellular, radio, etc. In one embodiment, a controller area network (CAN) bus provides the exchange of signals, information, and/or data. The CAN bus includes any number of wired and wireless connections. Because the controller 140 is communicably coupled to the systems and components of FIG. 1, the controller 140 is structured to receive data from one or more of the components shown in FIG. 1. The structure and function of the controller 140 is further described in regard to FIG. 3.

As the components of FIG. 1 are shown to be embodied in the engine system 100, the controller 140 can be structured as one or more electronic control units (ECU), such as one or more microcontrollers. The controller 140 can be separate from or included with at least one of a transmission control unit, an exhaust aftertreatment control unit, a powertrain control module, an engine control module, etc. The function and structure of the controller 140 is described in greater detail in FIG. 3.

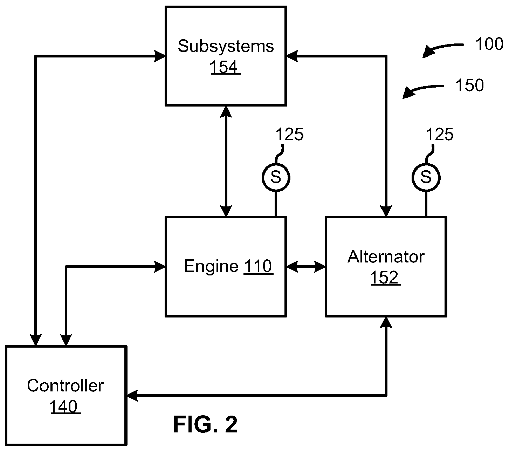

As shown in FIG. 2, the engine system 100 is embodied in a generator set 150 (also referred to herein as a "genset"). The genset 150 includes the engine 110 and an electrical machine, such as a generator, an alternator, etc. As shown in FIG. 2 the engine 110 is an alternator 152 that is connected to the engine 110 to receive mechanical power from the engine 110 and produce electrical power. The genset 150 also includes one or more genset subsystems 154. The genset subsystems may include an air intake system that provides fresh air to the engine 110 and the alternator 152, an aftertreatment system that receives and treats exhaust from the engine 110, a cooling system that cools the engine 110, a fuel system that provides fuel to the engine 110, and/or other systems for generating and providing electrical power.

The genset 150 also includes the controller 140. The controller 140 is configured to a control the operation of the genset 150. The controller 140 is communicably coupled to the engine 110, the alternator 152, and the subsystems 154. The controller 140 is described in more detail herein with respect to FIGS. 1 and 3.

Now referring to FIG. 3, a system 200 for generating a service recommendation is shown, according to an example embodiment. As shown, the system 200 includes a computing system 240. The computing system 240 includes a processing circuit 242.

In some embodiments, the processing circuit 242 includes one or more processors, shown as a processor 244. In some embodiments, processing circuit 242 includes memory, shown as a memory device 246.

In some embodiments, the computing system 240 is configured to perform one or more steps of the methods described herein. In some embodiments, the memory 246 store instructions that, when executed by one or more processors 244, cause the one or more processors 244 to perform operations. The operations can include any of the methods, or portions thereof, described herein. In some embodiments, the memory 246 may be or include non-transitory computer-readable media storing instructions that, when executed by one or more processors 244, cause the one or more processors 244 to perform operations. The operations can include any of the methods, or portions thereof, described herein.

In some embodiments, the system 200 includes the engine system 100 and the computing system 240. Referring first to the engine system 100, a schematic diagram of the controller 140 of the engine system 100 of FIGS. 1 and 2 is shown according to an example embodiment. As shown in FIG. 3, the controller 140 can include at least one processing circuit 202 having at least one processor 204 and at least one memory device 206, and a communications interface 216. As described herein, the controller 140 can be structured to provide data (e.g., sensor data, engine operational data, etc.) to the computing system 240. That is, the computing system 240 can receive data from the controller 140.

In some embodiments, the controller 140 includes the processing circuit 202 having the at least one processor 204 and the at least one memory device 206. The processing circuit 202 can be structured or configured to execute or implement the instructions, commands, and/or control processes described herein with respect to the engine system 100.

The at least one processor 204 can be implemented as one or more single- or multi-chip processors, digital signal processors (DSPs), application specific integrated circuits (ASICs), field programmable gate arrays (FPGAs), and/or suitable processors (e.g., other programmable logic devices, discrete hardware components, etc. to perform the functions described herein). A processor can be a microprocessor or other type of processor. A processor also can be implemented as a combination of computing devices, such as a combination of a DSP and a microprocessor, a plurality of microprocessors, one or more microprocessors in conjunction with a DSP core, or any other such configuration. In some embodiments, the one or more processors can be shared by multiple circuits (e.g., one or more other processing circuits can include or otherwise share the same processor which, in some example embodiments, can execute instructions stored, or otherwise accessed, via different areas of memory). Alternatively or additionally, the one or more processors can be structured to perform or otherwise execute certain operations independent of one or more co-processors. In other example embodiments, two or more processors can be coupled via a bus to enable independent, parallel, pipelined, or multi-threaded instruction execution. All such variations are intended to fall within the scope of the present disclosure.

The at least one memory device 206 (e.g., memory, memory unit, storage device) can include one or more devices (e.g., RAM, ROM, Flash memory, hard disk storage) for storing data and/or computer code for completing or facilitating at least certain of the various processes, layers and modules described in the present disclosure. For example, the memory device 206 can include dynamic random-access memory (DRAM). The memory device 206 can be communicably connected to the processor 204 to provide computer code or instructions to the processor 204 for executing at least some of the processes described herein. Moreover, the memory device 206 can be or include tangible, non-transient volatile memory or non-volatile memory. Accordingly, the memory device 206 can include database components, object code components, script components, or any other type of information structure for supporting the various activities and information structures described herein.

The communications interface 216 can include any combination of wired and/or wireless interfaces (e.g., jacks, antennas, transmitters, receivers, transceivers, wire terminals) for conducting data communications with various systems, devices, or networks structured to enable in-vehicle communications (e.g., between and among the components of the vehicle) and out-of-vehicle communications (e.g., with a remote server). For example and regarding out-of-vehicle/system communications, the communications interface 216 can include an Ethernet card and port for sending and receiving data via an Ethernet-based communications network and/or a Wi-Fi transceiver for communicating via a wireless communications network. The communications interface 216 can be structured to communicate via local area networks or wide area networks (e.g., the Internet) and can use a variety of communications protocols (e.g., IP, LON, Bluetooth, ZigBee, radio, cellular, near field communication).

As shown, the communications interface 216 can enable communication with the components of the engine system 100, such as the engine 110, the sensors 125, and/or the subsystems 135. In some embodiments, the communications interface 216 can enable communication with the computing system 240.

In some embodiments, the computing system 240 can be owned by, managed by, and/or otherwise associated with a provider entity. In some embodiments, the provider entity or organization can be remote from the engine system 100. In these embodiments, the computing system 240 may be a "remote" computing system. In some embodiments, a "remote" computing system can be a computing system that is located away from the engine system 100. In some embodiments, the remote computing system is located a predetermined distance away from the engine system 100. In some embodiments, the remote computing system is located in a different building than the engine system 100. In some embodiments, the remote computing system is not coupled to a chassis of the engine system 100.

In some embodiments, the computing system 240 can be embodied in or proximate (e.g., within a predetermined distance of) the engine system 100. In some embodiments, the computing system 240 can be physically coupled to the engine system 100.

The provider entity may be an original equipment manufacturer (e.g., of the controller, the engine, parts of the engine system 100, etc.), a data analytics provider, a service provider (e.g., a repair or technician organization), a combination thereof, and so on.

The computing system 240 includes at least one processing circuit 242 having at least one processor 244 coupled to at least one memory device 246. In some embodiments, the computing system 240 includes a service recommendation generation circuit 250 and a communications interface 252.

The computing system 240 is structured to generate a service recommendation. The service recommendation can be provided on a display, such as a display on a user device (e.g., a personal computer, a laptop, a smartphone, etc.). In some embodiments, the service recommendation is provided to the user device by message delivered via a messaging service (e.g., email, text message, etc.). In some embodiments, the message includes a hyperlink or scannable code that directs a web browser of the user device to a web-based version of the service recommendation and/or a downloadable file (e.g., a PDF document, a .DOC(X) document, etc.) that includes the service recommendation. In other embodiments, the message includes a downloadable file that includes the service recommendation. In still other embodiments, the service recommendation is provided via a user interface of a mobile application that is hosted by the user device. The mobile application may be a downloadable software application that is at least partly provided and supported by the computing system 240. In some embodiments, the generated user interface from the mobile application includes one or more predefined or pre-populated fields depicting one or more aspects of the service recommendation (information dynamically determined and/or other information associated and/or included with the service recommendation).

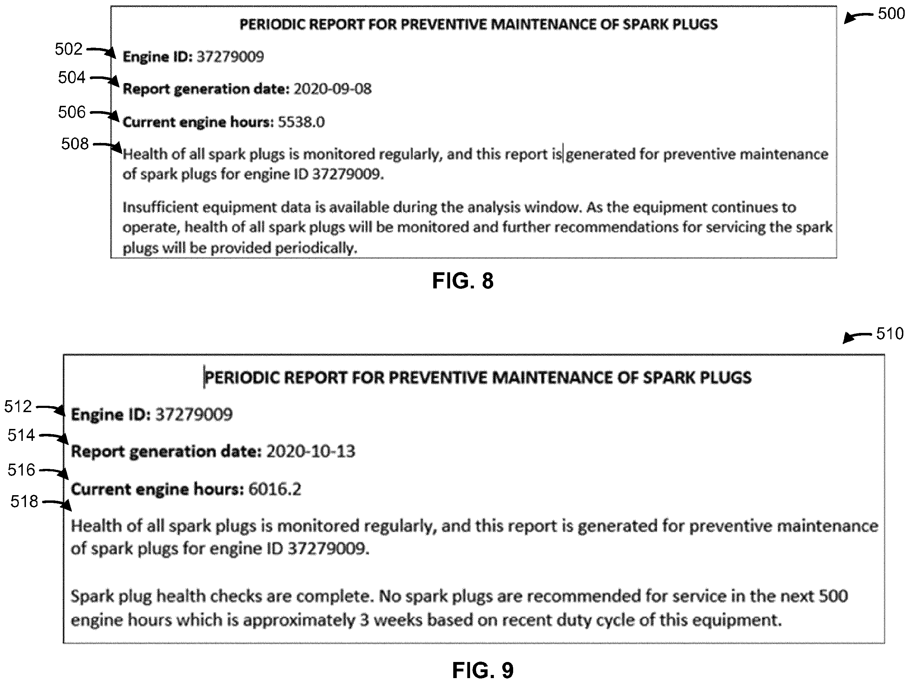

In some embodiments, the computing system 240 can generate two or more service recommendations. For example, the computing system can generate a first service recommendation (e.g., a near-term service recommendation) and a second service recommendation (e.g., an extended term service recommendation). The computing system 240 can generate a coordinated service recommendation based on the first service recommendation and the second service recommendation. Examples of a coordinated service recommendation , which can be displayable on a user interface (e.g., a screen, a monitor, etc.), are shown in FIGS. 8-11.

The service recommendation can refer to an object that provides information or data regarding the engine system 100 (e.g., serial number, purchase date, etc.) and service, repair, maintenance, etc. information regarding the engine system 100 (e.g., service intervals for one or more components, etc.). The service recommendation can include information regarding future "service event(s)." In some embodiments, a "service event" can refer to an event where a system and/or a component(s) thereof, such as the engine system 100 and/or the components thereof, is serviced (e.g., by a service technician or other person). The service event can include inspecting, troubleshooting, repairing, and/or replacing one or more components of a system. For example, the service event can include, but is not limited to, troubleshooting, repairing, and/or replacing a spark plug 116. The service event can take place at a service site (e.g., a repair business, a vehicle dealership, etc.) or elsewhere, such as a location of the engine system. The information included in the service recommendation can include a time until an upcoming service event (e.g., a first service event), a list of parts that are recommended to be repaired or replaced at the upcoming service event, metadata corresponding to the engine system 100, and/or other information described herein. In some embodiments, the service recommendation can include information about subsequent service events (e.g., after the first service event), such as a time until each subsequent service event, a list of parts that are recommended to be repaired or replaced at each subsequent service event, etc. In some embodiments, the service recommendation can indicate that service is not recommended. For example, the service recommendation can include an indication that one or more parts are not recommended to be repaired or replaced within the predetermined threshold, an indication that a service event is not recommended within a predetermined threshold, etc. In some embodiments, when the service recommendation indicates that service is not recommended, the service recommendation may also indicate that the component(s) is/are not at the end of a useful life based on analysis of a usage, application and duty cycle of the component(s). Advantageously, recommending to not service components can avoid pre-mature repair or replacement of components.

The metadata may include information about the engine system 100, such as engine identifier information (e.g., a serial number, a VIN (when the engine system 100 is embodied in a vehicle), or other identification), a timestamp for one or more data points, and/or a timestamp for transmissions between the engine system 100 (or more specifically the controller 140) and the computing system 240. In some embodiments, the engine identifier information may be stored by the controller 140, or, more specifically, stored by the memory device 206 and provided to the computing system 240 by a direct transmission of the metadata and/or an analysis of data transmissions (e.g., data packets, payloads, etc.) that include the metadata. The timestamps corresponding to the data points be generated by the controller 140 and/or the sensors 125 when the data is acquired. The timestamps corresponding to the data transmissions may be generated by the controller 140 and/or the computing system 240 when a transmission occurs and affixed or included with the data transmissions as metadata. In some embodiments, the data transmissions may be encrypted where the key for decryption is stored by the computing system 240. Upon receipt, the computing system 240 may utilize the stored key to decrypt the received payload and analyze the metadata along with the information contained in the payload.

In some embodiments, the computing system 240 is embodied as a computing device, such as a desktop computer, a laptop computer, etc. In some embodiments, the computing system 240 is embodied as a server, such as a cloud server, a privately owned server, a leased server (e.g., AWS, GCP, Azure, etc.), or other distributed computing system.

In one configuration, the service recommendation generation circuit 250 is embodied as machine or computer-readable media storing instructions (e.g., programmable logic) that are executable by a processor, such as processor 244. The computer readable media instructions can include code, which can be written in any programming language including, but not limited to, Java or the like and any conventional procedural programming languages, such as the "C" programming language or similar programming languages. The computer readable program code can be executed on one processor or multiple remote processors. In the latter scenario, the remote processors can be connected to each other through any type of network (e.g., CAN bus, etc.).

In another configuration, the service recommendation generation circuit 250 is embodied as hardware units, such as one or more electronic control units. As such, the service recommendation generation circuit 250 can be embodied as one or more circuitry components including, but not limited to, processing circuitry, network interfaces, peripheral devices, input devices, output devices, sensors, etc. In some embodiments, the service recommendation generation circuit 250 can take the form of one or more analog circuits, electronic circuits (e.g., integrated circuits (IC), discrete circuits, system on a chip (SOCs) circuits, microcontrollers, etc.), telecommunication circuits, hybrid circuits, and any other type of "circuit." In this regard, the service recommendation generation circuit 250 can include any type of component for accomplishing or facilitating achievement of the operations described herein. For example, a circuit as described herein can include one or more transistors, logic gates (e.g., NAND, AND, NOR, OR, XOR, NOT, XNOR, etc.), resistors, multiplexers, registers, capacitors, inductors, diodes, wiring, and so on). The service recommendation generation circuit 250 can include or be programmable hardware devices such as field programmable gate arrays, programmable array logic, programmable logic devices or the like. The service recommendation generation circuit 250 can include one or more memory devices for storing instructions that are executable by the processor(s) of the service recommendation generation circuit 250. The one or more memory devices and processor(s) can have the same definition as provided below with respect to the memory device 246 and processor 244. In some hardware unit configurations, the service recommendation generation circuit 250 can be geographically dispersed throughout separate locations in the system 200. Alternatively and as shown, the service recommendation generation circuit 250 can be embodied in or within a single unit/housing, which is shown as the computing system 240.

In the example shown, the computing system 240 includes the processing circuit 242 having the processor 244 and the memory device 246. The processing circuit 242 can be structured or configured to execute or implement the instructions, commands, and/or control processes described herein with respect to the service recommendation generation circuit 250. The depicted configuration represents the service recommendation generation circuit 250 being embodied as machine or computer-readable media storing instructions. However, as mentioned above, this illustration is not meant to be limiting as the present disclosure contemplates other embodiments where the service recommendation generation circuit 250 is configured as a hardware unit. All such combinations and variations are intended to fall within the scope of the present disclosure.

The at least one processor 244 can be implemented as one or more single- or multi-chip processors, digital signal processors (DSPs), application specific integrated circuits (ASICs), field programmable gate arrays (FPGAs), and/or suitable processors (e.g., other programmable logic devices, discrete hardware components, etc. to perform the functions described herein). A processor also can be implemented as a combination of computing devices, such as a combination of a DSP and a microprocessor, a plurality of microprocessors, one or more microprocessors in conjunction with a DSP core, or any other such configuration. In some embodiments, the one or more processors can be shared by multiple circuits (e.g., the service recommendation generation circuit 250 can include or otherwise share the same processor which, in some example embodiments, can execute instructions stored, or otherwise accessed, via different areas of memory). Alternatively or additionally, the one or more processors can be structured to perform or otherwise execute certain operations independent of one or more co-processors. In other example embodiments, two or more processors can be coupled via a bus to enable independent, parallel, pipelined, or multi-threaded instruction execution. All such variations are intended to fall within the scope of the present disclosure.

The at least one memory device 246 (e.g., memory, memory unit, storage device) can include one or more devices (e.g., RAM, ROM, Flash memory, hard disk storage) for storing data and/or computer code for completing or facilitating the various processes, layers and modules described in the present disclosure. For example, the memory device 246 can include dynamic random-access memory (DRAM). The memory device 246 can be communicably connected to the processor 244 to provide computer code or instructions to the processor 244 for executing at least some of the processes described herein. Moreover, the memory device 206 can be or include tangible, non-transient volatile memory or non-volatile memory. Accordingly, the memory device 246 can include database components, object code components, script components, or any other type of information structure for supporting the various activities and information structures described herein.

The communications interface 252 can include any combination of wired and/or wireless interfaces (e.g., jacks, antennas, transmitters, receivers, transceivers, wire terminals) for conducting data communications with various systems, devices, or networks structured to enable in-vehicle communications (e.g., between and among the components of the vehicle) and out-of-vehicle communications (e.g., with a remote server). For example and regarding out-of-vehicle/system communications, the communications interface 525 can include an Ethernet card and port for sending and receiving data via an Ethernet-based communications network and/or a Wi-Fi transceiver for communicating via a wireless communications network. The communications interface 525 can be structured to communicate via local area networks or wide area networks (e.g., the Internet) and can use a variety of communications protocols (e.g., IP, LON, Bluetooth, ZigBee, radio, cellular, near field communication). As shown in FIG. 3, the communications interface 252 is configured to enable communication with the controller 140 of the engine system 100. The communications interface 252 is also configured to enable communication with a user device, such as a laptop, computer, remote terminal, smartphone, etc. such that the computing system 240 is operable to communicate with the user device via the communications interface 252. For example, the communications interface 252 may enable the computing system 240 to transmit information, including one or more service recommendation and/or a coordinated service recommendation, to a user device and/or receive a user input from the user device.

In some embodiments, the service recommendation generation circuit 250 is structured to generate one or more service recommendations. In some embodiments, when the service recommendation generation circuit 250, generates only one service recommendation, the coordinated service recommendation generation circuit 250 does not generate a coordinated service recommendation. In some embodiments, when the service recommendation generation circuit 250, generates only two or more service recommendations, the service recommendation generation circuit 250 may use the two or more service recommendations to generate the coordinated service recommendation.

In some embodiments, the service recommendation generation circuit 250 is structured to generate a coordinated service recommendation. In some embodiments, the coordinated service recommendation generation circuit 250 is structured to generate a coordinated service recommendation for the engine system 100. In some embodiments, the coordinated service recommendation generation circuit 250 is structured to generate a coordinated service recommendation for a fleet or group of engine systems 100, which can include the engine system 100 (e.g., a fleet of vehicles, a group of gensets, etc.).

The service recommendation generation circuit 250 is structured to aggregate information about one or more components of an engine system, such as the engine system 100, using data (e.g., sensor data, engine operational data, etc.) and/or models (e.g., statistical models, physics models, machine learning models, etc.). The coordinated service recommendation generation circuit 250 is configured or structured to generate (e.g., determine) a service recommendation based on the data. The service recommendation can be used to optimize equipment downtime of the engine system 100, reduce premature repair/replacement of the components, and/or prevent damage to the components.

In some embodiments, the service recommendation can be provided to an operator or owner of the engine system (such as the engine system 100), a manufacturer of the engine system and/or the components thereof, a distributor of the engine system and/or the components thereof, a service provider (e.g., a business that repairs the engine systems, a service technician, etc.), etc. In some embodiments, the service recommendation is provided to via a secure link that is sent to a user device. In some embodiments, the user device is registered with a user account before the link is sent to the user device. In some embodiments, the secure link includes a secure timer that deactivates the link when the timer expires. In some embodiments, when the link is accessed by the user device, the link causes the user device to prompt a user to input a login credential (e.g., a user name and password, a biometric input, a personal identification number (PIN) input, etc.) before displaying/providing access to the service recommendation.

According to various example embodiments, the coordinated service recommendation generation circuit 250 is structured to generate the coordinated service recommendation based on, for example, data corresponding to one or more engine systems, such as the engine system 100, and/or one or more models (e.g., machine learning models, statistical models, physics models, etc.). In some embodiments, the service recommendation generation circuit 250 is structured to receive engine system data (or "system data") that corresponds to the engine system 100. The system data includes predicted remaining useful life (RUL) values for one or more components or systems of the engine system 100. In some embodiments, service recommendation generation circuit 250 is structured to receive sensor data from sensors 125 and/or other data related to the RUL of a component of the engine system 100. In some embodiments, the system data can include an identifier associated with the engine 110 and/or the engine system 100.

In some embodiments, the service recommendation generation circuit 250 is configured or structured to determine, based on the system data a predicted RUL value for one or more of the components of the engine system 100. In an example embodiment, the RUL of the one or more components of the engine system 100 can vary based on a duty cycle, ambient conditions, in-cylinder conditions, part-to-part variability, etc. leading to different RUL value for each of the one or more components. In some embodiments, a computing system, such as the controller 140, the computing system 240, and/or a different computing system) is configured to determine the RUL values based on a model (e.g., a statistical model, regression model, a machine learning model, etc.) that correlates one or more characteristics of a component to a RUL value of the component.

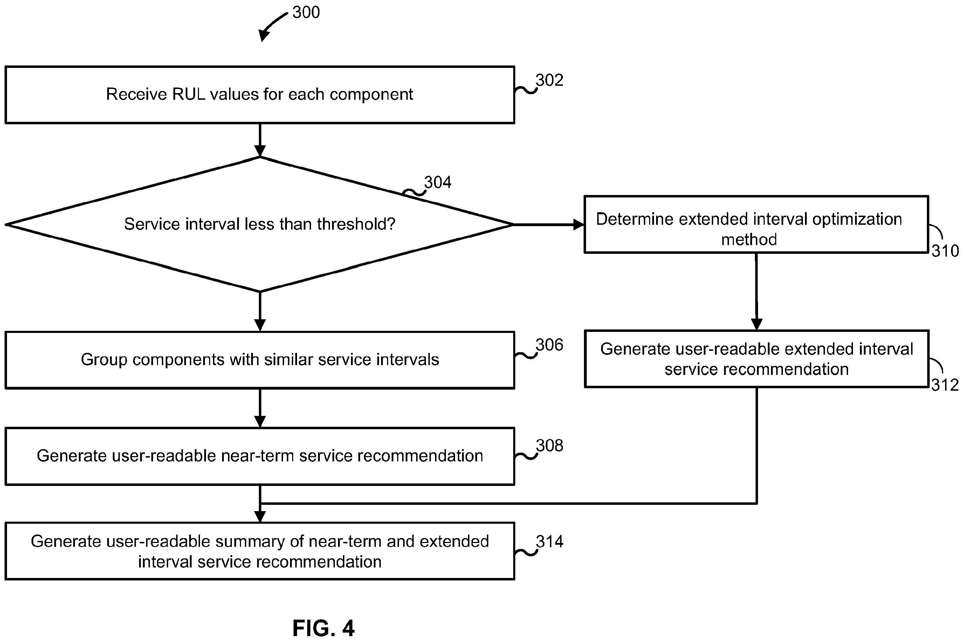

The service recommendation generation circuit 250 is structured to determine a coordinated service recommendation at least partially based on the RUL values of the one or more components. In some embodiments, the service recommendation generation circuit 250 is structured to determine a near-term service recommendation for components that have RUL values that are less than or equal to a service interval threshold. The service recommendation generation circuit 250 is structured to determine an extended-term service recommendation for components that have RUL values that are greater than the service interval threshold. In some embodiments, the service interval threshold is based on when a service event will occur. For example, a first service interval threshold may include a time range between a current time and a time of a first service event. A second service interval threshold may include a time range between the first service event and a second service event. In other embodiments, the service interval threshold may be defined by the maximum value of a service interval. In the above example, the first service interval threshold may be defined by the time of the first service event and the second service interval threshold may be defined by the time of the second service event. In other embodiments, the service interval threshold is a threshold based on a lead time needed before a service event. The service interval threshold is described in more detail herein with respect to FIG. 4.

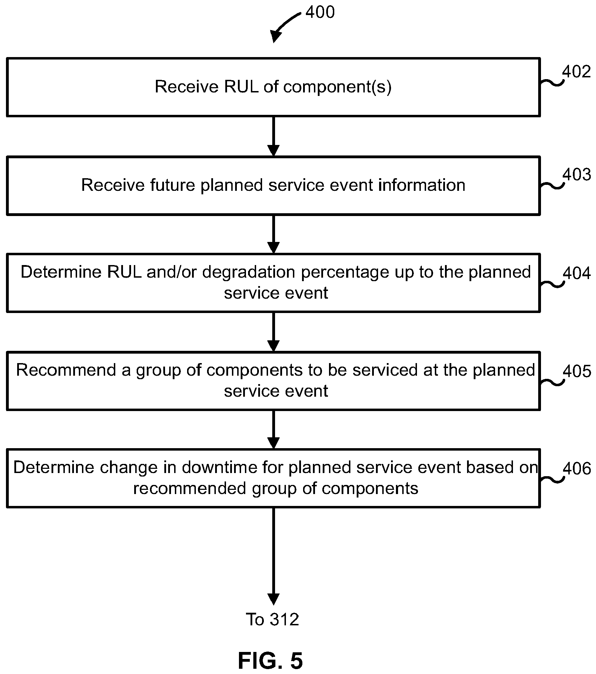

The processes used by the service recommendation generation circuit 250 to determine the near-term service recommendation are described in more detail herein with respect to FIG. 4. The processes used by the service recommendation generation circuit 250 to determine the extended-term service recommendation advantageously include a multi-factor approach to generate the extended-term service recommendation, described herein with respect to FIGS. 5-7. The service recommendation generation circuit 250 is configured to use one or more processes, as described herein, to generate one or more service recommendations. In some embodiments, the service recommendation generation circuit 250 is configured to generate a coordinated service recommendation based on two or more generated service recommendations.

In some embodiments, generating a service recommendation (e.g., a coordinated service recommendation) includes a planned service downtime method or process, a fleet method or process, and/or dynamic service interval method or process. Any of these methods or processes can include the use of models (e.g., statistical models, machine learning models, etc.) to generate the service recommendation. In an example embodiment the models are unsupervised machine learning algorithms that correlate one or more characteristics of the engine system 100 (e.g., one or more RUL values and/or other values described herein) and/or other information described herein to a recommended service recommendation. More specifically, the unsupervised machine learning algorithms use the one or more characteristics of the engine system 100 and/or the other information described herein as inputs for the model, and the model is configured to output a recommended service recommendation.

In various example embodiments, a service recommendation can include servicing grouped components during a planned service downtime (e.g., a planned service event). An example flow chart of the planned service downtime method 400 is shown in FIG. 5.

In some embodiments, the method includes receiving, by the at least one processing circuit 242, information regarding the planned service event including an engine hour value corresponding to the planned service event, a list of components planned to be serviced during the planned service event, and a predicted downtime during the planned service event, the predicted downtime based on the list of components. The method also includes generating, by the at least one processing circuit 242, a first group of RUL values of the plurality of RUL values. Each RUL value of the first group of RUL values within a predetermined threshold of the engine hour value. The first group of RUL values including at least the third RUL value.

In some embodiments, the service recommendation generation circuit 250 is configured to receive system data including a RUL value of one or more components. In some embodiments, the RUL values include an extended term group of RUL values. The extended term group of RUL values are received responsive to determining that at least one RUL value of a plurality of received RUL values is greater than the service interval threshold. The system data can also include duty cycle information such as an equipment run time. For example, the duty cycle information includes a run time for each component of the system 100. The service recommendation generation circuit 250 is also configured to receive information regarding future planned service events. The information regarding future planned service events includes an indication of when one or more future services events will occur in terms of an event date (e.g., a calendar date) or engine hours/genset hours (e.g., 500 engine hours, 1000 engine hours, 500 genset hours, 1000 genset hours, etc.). In some embodiments, the information regarding future planned service events also includes a list of components and/or systems that are planned to be serviced during the future planned service events and/or a predicted downtime based on the components and/or systems in the list.

In an example embodiment, the computing system 240 is configured to receive duty cycle information associated with a third component. The third component corresponds to a third RUL value of the plurality of RUL values. The duty cycle information includes a run time of the third component. The computing system 240 can determine a total life value for the third component based on an aggregate of the run time and the third RUL value. The method includes determining, by the at least one processing circuit, a degradation value up to a planned service event based on the total life value relative to the third RUL value. In these embodiments, the computing system 240 can dynamically populate the one or more fields of a coordinated service recommendation, including populating a degradation field with the degradation value.

In some embodiments, dynamically populating the one or more fields of the coordinated service recommendation includes populating a recommendation field with a recommendation to service a set of components. The set of components includes at least the third component.

The service recommendation generation circuit 250 is configured to determine (e.g., extrapolate using a model, such as a regression model or other suitable model) a degradation value (e.g., a degradation percentage) for each of the one or more components based on the RUL value. More specifically, the service recommendation generation circuit 250 is configured to determine a degradation value up to the planned service event based on a total life value relative to the corresponding RUL value. For example, the service recommendation generation circuit 250 is configured to determine a "life value" or a total life of a component based on the run time of the component plus the RUL of the component. The life value is described in greater detail herein below. The service recommendation generation circuit 250 is configured to determine a degradation value based on comparing at least one of the run time or the RUL value to the total life. For example, the service recommendation generation circuit 250 is configured to determine that the degradation value is equal to the RUL value divided by the total life of the component. In some embodiments, the service recommendation generation circuit 250 is configured to determine the degradation percentage up to a planned service event. In some embodiments, the service recommendation generation circuit 250 is configured to include the degradation value in the service recommendation. In an example embodiment, the service recommendation generation circuit 250 is configured to receive duty cycle information associated with the component or system of the engine system. The duty cycle information includes a run time of the component or system of the engine system. The service recommendation generation circuit 250 is configured to determine a total life value for the component or system of the engine system based on an aggregate of the run time and a corresponding RUL value of the plurality of RUL values. The service recommendation generation circuit 250 is configured to determine a degradation value based on the total life value relative to the corresponding RUL value.

Based on the RUL value and/or the degradation percentage for the one or more components, the service recommendation generation circuit 250 is configured to generate or determine a group of components and/or systems that have RUL values that are within a first threshold period of time before and/or after a first planned service event (e.g., within 50 operating hours, within 100 operating hours, within 500 operating hours, etc.). The service recommendation generation circuit 250 is configured to recommend servicing the components of the group of components during the first planned service event.

In an example embodiment, the computing system 240 can generate a downtime prediction based on a downtime value of a component. In these embodiments, the extended term service recommendation further includes the downtime prediction.

Responsive to determining the group of components and/or systems, the service recommendation generation circuit 250 is configured to determine a first predicted downtime during the first planned service event based on the components and/or systems in the group. For example, the computing system 240 is configured to generate a downtime prediction based on a downtime value of one or more components that correspond to RUL values that are in the extended term group of RUL values. More specifically, the computing system 240 is configured to generate a downtime prediction based on a downtime value of each component and/or system of the group of components and/or systems that correspond to RUL values within the first threshold period of time of the first planned service event. For example, each component can correspond to a predicted downtime value. The service recommendation generation circuit 250 is configured to determine the first predicted downtime based on a sum or aggregate of the predicted downtime values for each of the components in the group. The service recommendation generation circuit 250 is configured to generate a service recommendation that includes the first predicted downtime and/or an indication of component(s) that are recommended to be serviced during the first planned service event. In some embodiments, the service recommendation generation circuit 250 is configured to determine (e.g., calculate) a change in downtime for the planned service event based on the downtime prediction and the original predicted downtime of the planned service event. For example, the downtime for the planned service event may increase based on the service recommendation generation circuit 250 recommending servicing more or different components and/or systems than the original planned service event, and the downtime for the planned service event may decrease based on the service recommendation generation circuit 250 recommending servicing fewer or different components and/or systems than the original planned service event.

In some embodiments, the service recommendation generation circuit 250 is configured to generate a service recommendation (e.g., an extended term service recommendation) including the group of components and the downtime prediction.

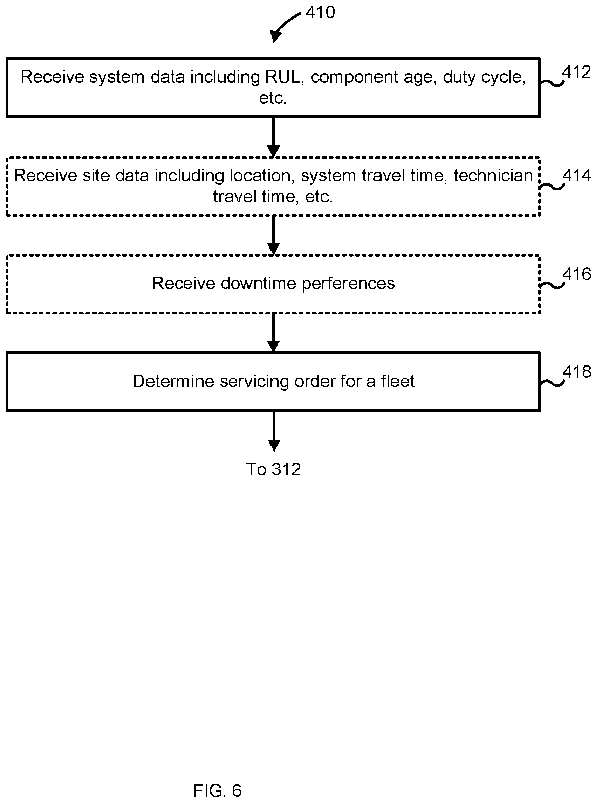

In other example embodiments, the service recommendation can include servicing components of a fleet of systems that includes the engine system 100 at a fleet service site based on system data received from one or more engine systems of the fleet. An example flow chart of the fleet method 410 is shown in FIG. 6. In these embodiments, the system data can include data corresponding to one or more engine systems, such as a RUL value for one or more components of the one or more engine systems, an age of one or more components of the one or more engine systems, a duty cycle of the one or more engine systems, and/or other data received from the one or more engine systems. In some embodiments, the service recommendation can include and/or be based on data corresponding to the fleet service site, such as a location of the fleet service site, a travel time for a system to arrive at the fleet service site, a travel time for a service technician to arrive at the fleet 29ervicee site, a distance between the fleet service site and a distributor of parts need for servicing the systems in the fleet, etc. In some embodiments, the service recommendation can be based on data received from an operator of the fleet, such as an operator preference for downtime.

In an example operating scenario, the service recommendation generation circuit 250 is configured to receive system data including a RUL value, component age, and duty cycle for one or more components of one or more engine systems in the fleet. In some embodiments, the computing system 240 is configured to store site data (e.g., in the memory device 246). The site data includes a site location, travel times for the system and/or a technician, and/or distance to part distributors. As described herein, the computing system 240 is configured to determine various locations, distances, travel times, etc. related to the repair site.

In any of the embodiments described herein the computing system 240 is configured to use (e.g., access, download, or otherwise interface with) a web-based map platform (e.g., Google Maps Platform) to determine locations, addresses, distances, travel times, traffic information and/or other map.

The site location is a predefined geo-location, such as an address or other location identifier. The computing system 240 is configured to receive the site location via a user input.

The travel time for a system is a determined time value. For example, computing system 240 is configured to receive a geo-location of the system 100 (e.g., from the controller 140) and determine a travel time based on a distance between the system 100 and the fleet service site.

In some embodiments, the computing system 240 is also configured to receive current or predicted traffic conditions from a third-party computing system (e.g., via a website, internet based interface, API, etc. In these embodiments, the computing system 240 is configured to determine the travel time based on the distance between the system 100 and the fleet service site and the current or predicted traffic conditions.

In some embodiments, the computing system 240 is configured to receive a geo-location of a technician from a user device associated with the technician). In other embodiments, the computing system 240 may store an address associated with the technician, such as a home address or other address. The computing system 240 is configured to receive the address via a user input (e.g., an input from the technician). The computing system 240 is configured to determine the travel time of the technician based on the distance between the geo-location of the technician and the service site, the distance between the address associated with the technician and the service site, and/or the current or predicted traffic conditions.

In some embodiments, the computing system 240 is configured to store a location of a parts distributor. The parts distributor location is a predefined geo-location, such as an address or other location identifier. The computing system 240 is configured to receive the parts distributor location via a user input. The computing system 240 is configured to determine a distance between the repair site and the parts distributor based on the site location and the parts distributor location.

The service recommendation generation circuit 250 can receive the site data, including the site location, travel times for the system and/or a technician, and/or distance to part distributors, from the memory device 246.

The service recommendation generation circuit 250 is configured to receive a downtime preference form a fleet operator. The downtime preference defines a user's preference for one or more downtime parameters including a downtime duration (e.g., a time period that an engine system 100 is not operating), a downtime schedule (e.g., a date(s), or days that the engine system 100 is not operating), etc. For example, a downtime preference may indicate that a user prefers that downtime for a particular engine system occurs on Wednesdays between 8:00 AM and 12:00 PM. In some embodiments, the service recommendation generation circuit 250 is configured to receive a user input indicating the downtime preference from a fleet operator (e.g., via the communications interface 252). In some embodiments, the downtime preference can include prioritizing certain engine systems over other engine systems. In some embodiments, the computing system 240 is configured to determine a priority value for each engine system and prioritize the engine systems according to the priority value(s).

In an example embodiment, the computing system 240 is configured to determine a priority value. The computing system 240 can perform operations including receiving system data corresponding to a plurality of engine systems. The system data including one or more remaining useful life (RUL) values. The computing system 240 can determine a priority value for each of the plurality of engine systems. The computing system 240 can generate a service recommendation by dynamically populating one or more fields of the service recommendation, the one or more fields including an ordered list of engine systems of the plurality of engine systems according to the priority value. The computing system 240 can provide the service recommendation to a user device.

Based on the system data, the site data, and the downtime preference, the service recommendation generation circuit 250 is configured to determine a priority value for each system in the fleet and order the systems based on the priority value. For example, the service recommendation generation circuit 250 is configured to determine a priority value for each of the plurality of engine systems based on an age of the engine system 100 and/or a total run time of each component of the engine system 100. For example, an older piece of equipment with one or more components having relatively lower RUL values takes priority for maintenance over another piece of newer equipment of the same fleet, in which the components have relatively larger RUL values compared to the RUL values of the one or more components of the older equipment. Beneficially, the priority value provides a user (e.g., a fleet or engine system owner or operator, a technician, etc.) with a holistic view of health of one or more engine systems in a fleet.

In some embodiments, generating the service recommendation includes populating the one or more fields of the service recommendation with an indication of parts needed to complete a service event.

In some embodiments, a first priority value for a first engine system of the plurality of engine systems is based on an age of first engine system, a total run time for a first component of the first engine system, and a RUL value for the first component of the first engine system.

In some embodiments, the first priority value is further based on a second priority value of a second engine system. In some embodiments, the second engine system located proximate the first engine system. In some embodiments, a difference between the first priority value and the second priority value at or below a predetermined threshold.

In some embodiments, the operations further include determining a predicted downtime value for a first engine system of the plurality of engine systems based on predicted downtimes of engine systems having higher priority values than the first engine system.

In some embodiments, the predicted downtime value is further based on a set of components that are recommended to be serviced, a travel time for the first engine system, a travel time for a technician, and a delivery time for service parts, such that the predicted downtime value for the first engine system is an aggregate of one or more of a service time for the set of components, the travel time for the first engine system, the travel time for the technician, the delivery time for service parts, and the predicted downtimes of engine systems having a higher priority value than the first engine system.

In another example, without the priority values of the fleet method or process, a technician can visit a site to service a first equipment and returns to the same site to service another equipment within a short period of time (e.g., within 2 days, within 3 days, etc.), and the travel time is increased. The increased travel time can increase the total cost by increasing the amount of working hours of the technician and/or increasing the cost of traveling by the technician. Beneficially, with the priority values, the service recommendation generation circuit 250 is configured to recommend servicing components of two different engine systems in the same visit thereby reducing the number of trips made by the service technician thereby reducing the travel time. The reduced travel time advantageously reduces the cost by reducing the number of working hours of the technician and reducing the cost of traveling by the technician.

In some embodiments, fleet level or site level insights beneficially enable users to estimate which and how many replacement parts need to be ordered. By proactively ordering relevant replacement parts, downtime caused by waiting for parts to arrive is reduced and/or overspending on unneeded parts is reduced. In some embodiments, the fleet method or process may be combined with the planned service downtime method or process and/or dynamic service interval method or process.

In some embodiments, the service recommendation generation circuit 250 is configured to determine a predicted downtime (e.g., a downtime prediction) for the one or more engine systems in the fleet based on the priority value, the components of the one or more engine systems that are recommended to be repaired/replaced, a travel time for the system, a travel time for the technician, and/or a distance to the parts distributors. For example, the predicted downtime of a first engine system can be an aggregate of one or more of time traveled to the fleet service site by the engine system, a predicted repair time based on the components of the first engine system that are recommended to be repaired or replaced, a predicted delivery time of parts needed to service the first engine system from the parts distributor, and/or a predicted downtime of engine systems having a higher priority than the first engine system. The service recommendation generation circuit 250 is configured to generate a service recommendation that includes a predicted downtime, an indication of parts needed to complete the service event, and/or an indication of technicians need to complete the service event for each of the one or more engine systems. A user, such as a fleet operator or a site manager, can use the service recommendation to service the vehicles in the fleet according to the order.

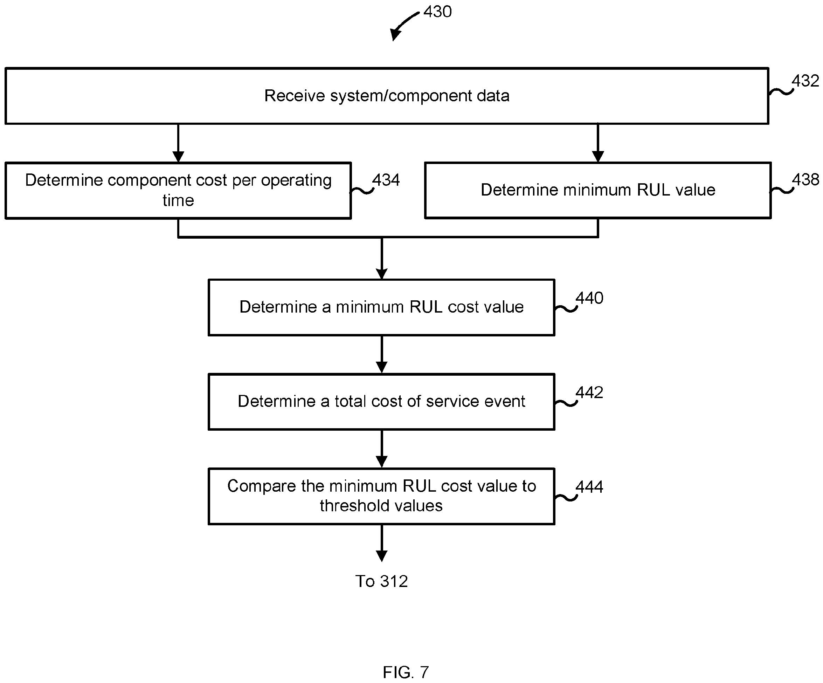

In yet other example embodiments, the service recommendation can include a recommendation for servicing the system or a component thereof based on a dynamic service interval. An example flow chart of the dynamic service interval method 430 is shown in FIG. 7. In these embodiments, the computing system 240 is configured to receive system data. The system data can be or include a RUL value, a cost, and a predetermined life value (also referred to herein as a "life value") for each component. The predetermined life value for a component is defined by a manufacturer of the component. In some embodiments, the service recommendation generation circuit 250 is configured to receive the predetermined life value from the manufacturer of the component (e.g., via a user input and/or via a web interface).

In some embodiments, the service recommendation generation circuit 250 is configured to receive receiving component data for each component of a plurality of components of an engine system. For example, the service recommendation generation circuit 250 is configured to receive component data that includes a RUL value, a cost, and a predetermined life value for each component and/or a system(s) of an engine system. The service recommendation generation circuit 250 is configured to determine a component cost per unit (e.g., of time, such as per hour) based on the cost and predetermined life value, for each component. More specifically and in one embodiment, the service recommendation generation circuit 250 is configured to use Equation (1), below, to determine the component cost per operating time. The component data includes a RUL value, a cost value, and a life value (e.g., a predetermined life value).

$$Component\ cost\ per\ time = \left(cost\ value\middle/ predetermined\ life\ value\right) \tag{1}$$

The service recommendation generation circuit 250 is also configured to determine a minimum RUL value of the RUL values of each component. For example, the service recommendation generation circuit 250 is configured to determine a minimum RUL value of the component data based on the received component data for each component of the plurality of components of the engine system 100. The minimum RUL refers to the smallest RUL value of the RUL values of each component. The minimum RUL value indicates that the associated component has the shortest or least amount of time remaining before the determined end of its useful life (e.g., where the component or system begins operating or function in a non-desired way). In an example embodiment, the service recommendation generation circuit 250 receive RUL values corresponding to one or more components of the engine system 100. The service recommendation generation circuit 250 is configured to analyze the RUL values and identify a minimum RUL value of the received RUL values. In other embodiments, the service recommendation generation circuit 250 is configured to group the received RUL values based on RUL value categories, such as less than 500 engine hours, between 500 and 1000 engine hours, greater than 1000 engine hours, less than 500 genset hours, between 500 and 1000 genset hours, greater than 1000 genset hours, etc.

The service recommendation generation circuit 250 is configured to determine a dynamic service interval based on the minimum RUL value. The service recommendation generation circuit 250 is configured to determine a dynamic service interval that is less than or equal to the minimum RUL value based on the minimum RUL value. The dynamic service interval defines a time when one or more service events occur. For example, the dynamic service interval defines a first service event. The one or more service events includes at least a first service event that occurs at or before the minimum RUL value.

In some embodiments, the time defined by the dynamic service interval includes a time difference between the current time and the time of a service event in terms of engine operating hours (e.g., 500 engine hours, 1000 engine hours, 500 genset hours, 1000 genset hours, etc.) The time difference between the current time and the time of a service event in terms of engine operating hours and/or genset operating hours is also referred to herein as a "dynamic service interval value," an "engine hours until a service event,", and/or a "genset hours until a service event." In some embodiments, the service recommendation generation circuit 250 is configured to predict a number of calendar days between the current date and the date of a service event based on the engine hours or genset hours until the service event and the duty cycle of the engine system 100. For example, the duty cycle of the engine system 100 indicates that the engine systems 100 operates 10 hours per day, and the service recommendation generation circuit 250 determined that the engine hours or genset hours until a service event is equal to 50 hours. The service recommendation generation circuit 250 is configured to determine that the number until the service event is 5 days, based on dividing the dynamic service interval value by the duty cycle value. In some embodiments, the service recommendation generation circuit 250 is configured to determine a calendar date of the service event based on the dynamic service interval. For example, the service recommendation generation circuit 250 is configured to determine the calendar date based on a current date and the number of days until the service event.

The service recommendation generation circuit 250 is configured to recommend servicing one or more additional components (e.g., one or more components that do not correspond to the minimum RUL value) at the first service event based on the dynamic service interval. For example, the service recommendation generation circuit 250 is configured to compare the minimum RUL value to the component cost per unit (e.g., of time, including operating hours, calendar days, etc.) for one or more components. As an example, the service recommendation generation circuit 250 is configured to determine (e.g., predict, extrapolate, etc.) a component cost per unit of time for the minimum RUL for one or more components (referred to herein as a "minimum RUL cost value") based on the component cost per operating time and the minimum RUL value. For example, the service recommendation generation circuit 250 is configured to determine the minimum RUL cost value by multiplying the component cost per time by the minimum RUL value. The minimum RUL cost value is an estimate of a cost of a component for the duration of the minimum RUL. In some embodiments, the minimum RUL cost value is based on the life value relative to the minimum RUL value.

The service recommendation generation circuit 250 is configured to determine a total cost of a service event based on a predicted downtime. For example, the service recommendation generation circuit 250 is configured to determine a predicted downtime for one or more components, as described herein. The service recommendation generation circuit 250 is configured to determine the total cost of a service event based on an opportunity cost of the downtime, an opportunity cost of unused RUL time, a cost of components and/or materials for the service event, a cost of service charges for the service event, and/or other costs associated with the service event. The opportunity cost of unused RUL time is the component cost per time multiplied by the unused RUL (e.g., the RUL of the component minus the minimum RUL). More specifically, the total cost of the service event is equivalent to the aggregate or sum of one or more of the opportunity cost of the downtime, the opportunity cost of unused RUL time, the cost of components and/or materials for the service event, the cost of service charges for the service event, and/or other costs associated with the service event.

The service recommendation generation circuit 250 is configured to compare the minimum RUL cost value for the one or more components to a maximum threshold cost value. The maximum threshold cost value can be based on or equivalent to the total cost of the service event. Thus, the service recommendation generation circuit 250 can compare the minimum RUL cost value for the one or more components to the total cost of the service event. Responsive to determining that the minimum RUL cost value of a component is less than or equal to the maximum threshold cost value, the service recommendation generation circuit 250 is configured to recommend servicing the component during the first service event. That is, the service recommendation generation circuit 250 can include the component in a first group of components that are recommended to be serviced at the first service event. In an example embodiment, the computing system 240 is configured to determine a minimum RUL cost value for each component of the plurality of components based at least in part on the cost value of each component of the plurality of components from the received component data.

Responsive to determining that the minimum RUL cost value of a component is greater than the maximum threshold cost value, the service recommendation generation circuit 250 is configured to recommend not servicing the component during the first service event (e.g., the component should be excluded from a recommended service group or list). That is, the service recommendation generation circuit 250 is configured to exclude the component from the first group of components that are recommended to be serviced at the first service event. Responsive to determining that the component should not be recommended to be serviced at the first service event, the service recommendation generation circuit 250 is configured to determine other components (e.g., the components that do not correspond to the minimum RUL value and components that should not be recommended to be serviced at the first service event) are recommended to be serviced at a subsequent service event. In these embodiments, the service recommendation generation circuit 250 is configured to determine a new minimum RUL (e.g., using the same processes to determine the minimum RUL value, described above) of the remaining components, determine a component cost per unit time for the new minimum RUL, and compare the component cost per unit time for the new minimum RUL to a new maximum threshold. Responsive to determining that the minimum RUL cost value of a component is less than or equal to the new maximum threshold cost, the service recommendation generation circuit 250 is configured to generate and provide a recommendation in the service recommendation for servicing the component at the subsequent service event. That is, the service recommendation generation circuit 250 can include the component in a second group of components that are recommended to be serviced at the subsequent service event.

In an example embodiment, the service recommendation generation circuit 250 is configured to receive a plurality of RUL values for one or more components including a first component having a first RUL value of 100 hours (e.g., 100 engine hours, 100 genset hours), a second component having a RUL value of 150 hours, and a third component having a RUL value of 200 hours. In this example, the first component has an arbitrary cost value and repair cost, the second component has a low cost value and low repair cost, and the third component has a high cost value and a high repair cost. The service recommendation generation circuit 250 is configured to determine a minimum RUL value of the received RUL values. The minimum RUL value in this example is 100 hours and corresponds to the first component. The service recommendation generation circuit 250 is configured to determine that the service event should take place within 100 operating hours from the present time. The service recommendation generation circuit 250 is also configured to recommend servicing the first component that corresponds with the minimum RUL value during the service event. The service recommendation generation circuit 250 is also configured to evaluate the cost of the remaining components (e.g., the second component and the third component) over the time period of the minimum RUL value. That is, the service recommendation generation circuit 250 is configured to determine that the minimum RUL cost value for the second component and the third component. The service recommendation generation circuit 250 is configured to determine the total cost of the service event, as described above. The service recommendation generation circuit 250 is configured to compare the minimum RUL cost value with the total cost of the service event.

In some embodiments, the method 300 is performed by the computing system 240. In some embodiments, the computing system 240 includes a non-transitory computer-readable media. In some embodiments, the memory 246 is or includes the non-transitory computer-readable media.

In an example embodiment of the method 300, the method 300 includes, at process 302, receiving, by at least one processing circuit 242 of a computing system 240, system data corresponding to an engine system 100. The system data includes a plurality of remaining useful life (RUL) values. Each RUL value of the plurality of RUL values associated with a component or system of the engine system 100. At process 304, the at least one processing circuit 242 determines that a first RUL value of the plurality of RUL values is less than a service interval threshold. At process 308, the at least one processing circuit 242 generates a near-term service recommendation including a first component that corresponds to the first RUL value. Referring back to process 304, the at least one processing circuit 242 determines that a second RUL value of the plurality of RUL values is greater than the service interval threshold. At process 312, the at least one processing circuit 242 generates an extended term service recommendation including a second component that corresponds to the second RUL value. At process 314, the at least one processing circuit 242 generates a coordinated service recommendation by dynamically populating one or more fields of the coordinated service recommendation based on the near-term service recommendation and the extended term service recommendation. In some embodiments, the at least one processing circuit 242 also provides the coordinated service recommendation to a user device.

Based on determining that the minimum RUL cost value is less than or equal to the total cost of the service event, the service recommendation generation circuit 250 is configured to recommend servicing the component during the service event. The second component will have 50 hours of RUL remaining at the time of the service event and has a low repair time and low repair cost, and thus the minimum RUL cost value is less than or equal to the total cost of the service event. The service recommendation generation circuit 250 is configured to recommend servicing the second component during service event to avoid an extra service event for servicing the second component alone.

Based on determining that the minimum RUL cost value is greater than the total cost of the service event, the service recommendation generation circuit 250 is configured to recommend servicing the component during a subsequent service event. The third component will have 100 hours of RUL remaining at the time of the service event and has a high repair time and high repair cost, and thus the minimum RUL cost value is greater than the total cost of the service event. The service recommendation generation circuit 250 is configured to recommend servicing the third component during a subsequent service event to avoid prematurely servicing the third component.

Thus, without using the method described above, the engine system 100 would be serviced three times at 100 engine hours, 150 engine hours, and 200 engine hours or, alternatively, at 100 genset hours, 150 genset hours, and 200 genset hours. Using the method described above, the engine system 100 would be serviced twice at 100 engine hours and 200 engine hours, or alternatively at 100 genset hours and 200 genset hours.

The service recommendation generation circuit 250 is configured to generate a service recommendation that includes a list of components recommended to be serviced during the first service event. In some embodiments, service recommendation generation circuit 250 is configured to generate a service recommendation that includes a list of components recommended to be serviced during one or more subsequent service events, after the first service event. For example, the service recommendation generation circuit 250 is configured to include an indication of a first component for servicing in a service recommendation at the first service event responsive to determining that the minimum RUL cost value of the first component is less than or equal to the threshold value. In this example, the service recommendation generation circuit 250 is configured to dynamically populate one or more fields of the service recommendation to include the first component. In another example, the service recommendation generation circuit 250 is configured to exclude a second component for servicing in the service recommendation responsive to determining that the minimum RUL cost value of the first component is greater than the threshold value.

In some embodiments, the service recommendation generation circuit 250 is configured to determine a cost of service for an individual component. In one embodiment, the cost of service can be based on a downtime for the service (e.g., time to perform the service, time to transport to/from the service location) multiplied by individual component cost per unit time, plus additional costs, such as a cost of the service technician, a cost of parts needed for the service, etc. In these embodiments, the service recommendation generation circuit 250 is configured to compare the component cost per unit time for the RUL of a component with the cost of servicing the component. More specifically, the service recommendation generation circuit 250 is configured to generate a service recommendation that includes servicing a component based on determining that the component cost per unit time for the RUL of a component is less than the cost of servicing the component.

Now referring to FIG. 4, a flow diagram illustrating a method 300 of generating a coordinated service recommendation is shown, according to an example embodiment. In particular, the method 300 relates to generating a coordinated service recommendation, as described above. In some embodiments, the computing system 240 and/or one or more components thereof, such as the service recommendation generation circuit 250, is/are configured to perform method 300. For example, the computing system 240 can be structured to perform the method 300, alone or in combination with other devices such as the engine system 100. Accordingly, as described herein, the method 300 can be performed by the computing system 240. In some embodiments, the processes of the method 300 can be performed in a different order than as shown in FIG. 4. In some embodiments, the method 300 can include more or fewer processes than as shown in FIG. 4. In some embodiments, the processes of the method 300 can be performed concurrently, partially concurrently, or sequentially.

Referring to the method 300 in more detail, at process 302, the computing system 240 receives RUL values for each component of the engine system 100. The RUL values can be received from the engine system 100 and/or another computing system. In some embodiments, the computing system 240 is configured to determine the RUL values for each component of the engine system 100. In some embodiments, if the computing system 240 does not receive the RUL data, the RUL data is incomplete, and/or if there is an insufficient amount of RUL data (e.g., the amount of RUL data is below a RUL data threshold), the computing system 240 is configured to generate a coordinated service recommendation notification that indicates that insufficient data has been received to generate the coordinated service recommendation.

At process 304, the computing system 240 compares the RUL values, such as a first RUL value, to a threshold (also referred to herein as a service interval threshold). The service interval threshold can be determined based on lead time needed before a service event. The computing system 240 is configured to determine the lead time based on one or more service parameters, such as a distance between a repair site and a parts distributor, a part availability at the part distributor, a distance between the system and the repair site, a distance between a technician and the system, a location of the system (e.g., in a building, in a field, in a city, in a rural area, etc.), etc. More specifically, each of the service parameters corresponds to a lead time value, and the computing system 240 is configured to determine the lead time based on an aggregate (e.g., sum) of the lead time values. For example, an engine system 100 in a remote location that is far from a parts distributor and a technician may have a longer lead time (e.g., one week, two weeks, etc.), and an engine system in a city that is near a service technician and a parts distributor may have a shorter lead time (e.g.,

one day, two days, etc.). In some embodiments, the computing system 240 is configured to determine the service interval threshold based on the lead time. For example, the service interval threshold may be equivalent to the lead time. In other embodiments, the computing system 240 is configured to determine the service interval threshold based on the lead time relative to a duty cycle value. In some embodiments, the duty cycle value is based on an average duty cycle per day such as an average run time per day, an average engine hours per day, or an average genset hours per day. More specifically, the duty cycle value may be determined based on a total engine hours or genset hours divided by a number of calendar days that the engine system 100 has been operating. For example, the service interval threshold can be equivalent to the lead time multiplied by the average engine hours per day or average genset hours per day. The computing system 240 is configured to determine the service interval threshold in terms of engine hours, genset hours, and/or a calendar date based on the engine hours or genset hours relive to the average engine hours per day or average genset hours per day.

In an example scenario, a first system that runs constantly (e.g., all-day and night without stop, or 24 hours per day) at a remote desert location has a lead time of 2 weeks (e.g., 14 days) and a second system that runs seldom (e.g., one hour per month) in a city building has a lead time of two days. The computing system 240 is configured to determine the service interval threshold for the first system as 14 days multiplied by 24 hours per day, or approximately 336 engine hours or genset hours. The computing system 240 is configured to determine the service interval threshold for the first system as two days multiplied by 0.03 hours per day, or approximately 0.06 engine hours or genset hours.

Responsive to determining that the RUL values (or a minimum RUL value) is/are less than or equal to the threshold, the method 300 may continue to process 306. In some embodiments, process 306 is optional. In these embodiments, the method 300 may continue to process 308. In some embodiments, the computing system 240 is configured to group the RUL value(s) that is/are less than or equal to the threshold in a near-term group of RUL values (or components that correspond to the RUL values). For example, the computing system 240 is configured to generate a first near-term group of RUL values responsive to determining that the first RUL value is less than or equal to the service interval threshold. In an example scenario, a first component has a RUL value of 100 hours, a second component has a RUL value of 150 hours, and a third component has a RUL value of 500 hours. A first service event will occur within the minimum RUL value (e.g., within 100 hours). The RUL value of the second component at the time of the service event is approximately 50 hours. The computing system 240 is configured to group the second component with the first component responsive to determining that the RUL value of the second component is less than the service interval threshold. The computing system 240 is configured to not group the second component and/or the third component with the first component responsive to determining that the RUL value of the second component and/or the third component is greater than the service interval threshold. For example, when the engine system 100 is in a remote location the computing system 240 is configured group components to reduce the number of trips a technician has to make to service the engine system 100. When the engine system 100 is in an easily accessible location, such as a city, the computing system 240 is configured to not group components to reduce the chance of a premature repair or replacement of a component.

Responsive to determining that the RUL values (or a minimum RUL value) is/are greater than the threshold, the method 300 may continue to process 310. In some embodiments, the computing system 240 is configured to group the RUL value(s) that is/are greater than the threshold in an extended-term group of RUL values (or components that corresponds to RUL values). For example, the computing system 240 is configured to generate a first extended term group of RUL values responsive to determining that a second RUL value of the plurality of RUL values is greater than the service interval threshold. In some embodiments, the components and/or RUL values that are not in the near-term group of RUL values or components are automatically grouped in the extended-term group of RUL values or components.

In some embodiments, responsive to determining that the RUL values are greater than a second threshold, the computing system 240 is configured to determine that a service event is not required within a near-term interval and an extended interval. Responsive to determining that that a service event is not required within the near-term interval and the extended interval, the computing system 240 is configured to generate a coordinated service recommendation notification that indicates that a service event is not required in the near-term or the extended interval. The notification can include an indication of the second threshold time in engine run time (e.g., 300 engine hours, 500 engine hours, 1000 engine hours, 300 genset hours, 500 genset hours, 1000 genset hours) and/or approximate dates or time until the second threshold time determined based on a current time and the duty cycle of the engine system 100 (e.g., 2 weeks, 3 weeks, 4 weeks, etc.).

At process 306, the computing system 240 is configured to group components with similar service intervals. In some embodiments, the method also includes process 306. At process 306, the at least one processing circuit 242 includes the first group of RUL values in the near-term service recommendation responsive to determining that each RUL value in the first group of RUL values is less than the service interval threshold.

In some embodiments, at process 306, the at least one processing circuit 242 receives a first near-term group of RUL values responsive to determining that the first RUL value is less than or equal to the service interval threshold. The near-term service recommendation further includes a first list of components that correspond to each RUL value in the first near-term group of RUL values.

In some embodiments, the computing system 240 is configured to use one or more models (e.g., machine learning models, statistical models, etc.) to group components that have corresponding RUL values that are within a predetermined range of each other. For example, the computing system 240 is configured receive the RUL values for one or more components of the engine system 100. The RUL values can include corresponding error values (e.g., an error band, an error interval, etc.). The computing system 240 is configured to use the one or more models to group components based on the corresponding RUL values having similar values. In some embodiments, the computing system 240 is configured to input a predetermined number of groups into the model. In other embodiments, the computing system 240 is configured to dynamically determine a number of groups based on the variability of the group centroids that the model outputs. For example, for a large number of groups, if a difference between 2 centroids (each centroid representative of a time value for a service event) is less than a predetermined threshold (e.g., 50 engine hours, 50 genset hours, or 1 day), computing system 240 is configured to automatically re-run the model with a reduced number of groups such that the centroids (service events) are farther apart, and would justify a separate visit to the site. In some embodiments, the model is a classifier model, such as a K-Means clustering model.

At process 308, the computing system 240 generates a near-term service recommendation. For example, the computing system 240 is configured to generate a near-term service recommendation. The near-term service recommendation includes a first list of components that correspond to each RUL value in the first near-term group of RUL values. In some embodiments, the near-term service recommendation is human-readable. The near-term service recommendation refers to a document, user interface, or other human-readable interface that includes a text description of a service recommendation. For example, the near-term service recommendation includes a notification indicating that the components grouped at process 306 should be serviced at the next service event, a first list of components that correspond to each RUL value in the first near-term group of RUL values, and/or a time until the next service event that is determined by the computing system 240. In some embodiments, generating the human-readable near-term service recommendation includes transforming computer-readable data, such as the RUL values, into human-readable data, such as a text summary of the grouped components that are to be serviced together. For example, the text summary may indicate that a first spark plug and a second spark plug have similar RUL values and will need servicing in the next 500 hours of runtime of the engine 110. In some embodiments, the human-readable near-term service recommendation is provided to a user, such as an operator of the engine system 100 and/or a service technician.

In some embodiments, the text summary can include information about a near-term service interval including which components need or are prioritized to be serviced during the near-term service interval and/or time values for the near-term service interval (e.g., engine run time until the near-term service interval and/or approximate dates for the near-term service interval determined based on a current time and the duty cycle of the engine system 100).

In some embodiments, generating the human-readable near-term service recommendation includes generating a document including one or more fields that are populated dynamically based on the components grouped at process 306. The fields include an identifier of the engine 110 or engine system 100, a report generation date, a current number of engine hours or genset hours, and the text summary of the near-term service recommendation. The computing system 240 is configured to dynamically populate the fields based on the components grouped at process 306 and/or other data received from the engine system 100, such as the engine identifier, sensor data, metadata, or other information described herein.

At process 310, responsive to determining that the RUL values are greater than the threshold, the computing system 240 determines an extended interval optimization procedure for generating a human-readable extended interval service recommendation. The extended interval optimization procedure can include one or more of the method shown in FIGS. 5-7.

FIG. 5 is a flow diagram illustrating a method 400 of generating an extended interval service recommendation, according to an example embodiment. In some embodiments, the method 400 is performed by the computing system 240. In some embodiments, the computing system 240 includes a non-transitory computer-readable media. In some embodiments, the memory 246 is or includes the non-transitory computer-readable media.

At process 402, the computing system 240 receives system data including RUL values. At process 403, the computing system 240 receives future planned service event information. At process 404, the computing system 240 determines a RUL and/or degradation value (e.g., percentage) up to the planned service event. At process 405, the computing system 240 recommends a group of components to be serviced at the planned service event. At process 405, the computing system 240. At process 406, the computing system 240 determines a predicted downtime and/or a change in downtime for the planned service event based on the grouped components.

FIG. 6 is a flow diagram illustrating a method 410 of generating an extended interval service recommendation, according to another example embodiment. In some embodiments, the method 410 is performed by the computing system 240. In some embodiments, the computing system 240 includes a non-transitory computer-readable media. In some embodiments, the memory 246 is or includes the non-transitory computer-readable media.

At process 412, the computing system 240 receives system data including RUL values, component ages, duty cycle information, etc. At process 414, the computing system 240 receives site data including location, system travel time to the site, technician travel time to the site, etc. In some embodiments process 414 is optional. At process 416, the computing system 240 receives downtime preferences from an operator of the fleet that includes the engine system 100. In some embodiments process 416 is optional. At process 418, the computing system 240 determines a servicing order for the fleet. In some embodiments, at process 418, the computing system 240 determines a priority value for each of a plurality of engine systems.

FIG. 7 is a flow diagram illustrating a method 430 of generating an extended interval service recommendation, according to yet another example embodiment. At process 432, the computing system 240 receives system data including RUL values, component costs, and component life times. At process 434, the computing system 240 determines a component cost per unit of operating time. At process 438, the computing system 240 determines a minimum RUL value of the RUL values. At process 440, the computing system 240 determines a minimum RUL cost value. For example, at process 440, the computing system 240 determines a component cost for the minimum RUL value determined at process 438. At process 442, the computing system 240 determines a total cost of a service event. For example, at process 442, the computing system 240 determines a total cost of the service event based on a predicted downtime. At process 444, the computing system 240 compares the minimum RUL cost value to threshold value(s). For example, at process 444, the computing system 240 determines whether the component operating cost justifies the total cost of service.

In some embodiments, the method 430 is performed by the computing system 240. In some embodiments, the computing system 240 includes a non-transitory computer-readable media. In some embodiments, the memory 246 is or includes the non-transitory computer-readable media.

In an example embodiment a non-transitory computer-readable media stores instructions that, when executed by one or more processors, cause the one or more processors to perform operations. The operations include receiving component data for each component of a plurality of components of an engine system. The component data includes a remaining useful life (RUL) value, a cost value, and a life value. The operations include determining a component cost per operating time based on the cost value and the life value for each component of the plurality of components. The operations include determining a minimum RUL value of the component data. The operations include determining a dynamic service interval based on the minimum RUL value. The dynamic service interval defines a first service event. The operations include determining a minimum RUL cost value for each component of the plurality of components based at least in part on the component cost per operating time and the minimum RUL value. The operations include determining a total cost of the first service event based on a predicted downtime of the first service event. The operations include comparing the minimum RUL cost value for each component to a threshold value. The threshold value is based on the total cost of the first service event. The operations include including a first component of the plurality of components in a service recommendation responsive to determining that the minimum RUL cost value of the first component is less than or equal to the threshold value. The operations include excluding a second component from the service recommendation responsive to determining that the minimum RUL cost value of the first component is greater than the threshold value. The operations include generating the service recommendation including dynamically populating one or more fields of the service recommendation to include the first component. The operations include providing the service recommendation to a user device.

In some embodiments, the generated service recommendation is a coordinated service recommendation. In some embodiments, the generated service recommendation is part of a coordinated service recommendation. For example, the coordinated service recommendation may include the generated service recommendation.

In some embodiments, the total cost of the first service event is further based on an opportunity cost of the predicted downtime of the first service event, an opportunity cost of unused RUL time, a cost of components and materials for the first service event, and a cost of service charges for the first service event.

In some embodiments, the minimum RUL cost value is equal to the component cost per time multiplied by the minimum RUL value.

In some embodiments, the dynamic service interval is further based on a difference between a current time and a time of the first service event.

In some embodiments, the operations further include receiving duty cycle information regarding the engine system. The duty cycle information includes a current engine hours value and an average engine hours per day value. The operations further include determining a number of calendar days between a current date and a date of the first service event based on the dynamic service interval, the current engine hours value, and the average engine hours per day value.

Referring back to FIG. 4, the computing system 240 is configured to select one or more of the method or process 300, the method or process 310, and/or the method or process 330 to determine the coordinated service recommendation. In some embodiments, the computing system 240 is configured to select the method 300 responsive to determining that only one system 100 is being considered for the coordinated service recommendation and/or responsive to determining that component cost data is not available. In some embodiments, the computing system 240 is configured to select the method 310 responsive to determining that more than one system 100 is being considered for the coordinated service recommendation. In some embodiments, the computing system 240 is configured to select the method 310 responsive to determining that only one system 100 is being considered for the coordinated service recommendation and/or responsive to determining that component cost data is available.

At process 312, responsive to selecting the method 330 to determine the coordinated service recommendation, the computing system 240 generates an extended interval service recommendation. For example, the computing system 240 is configured to generate an extended term service recommendation including the second list of components and the downtime prediction. In some embodiments, the extended interval service recommendation is human-readable. In some embodiments, the extended interval service recommendation includes a notification indicating which components of the engine system 100 should be serviced at the next service event and/or a time until the next service event that is determined by the computing system 240. In some embodiments, generating the human-readable extended interval service recommendation can include transforming computer-readable data, such as the RUL values, component cost values, distance values, etc. into human-readable data, such as a text summary of the components that are to be serviced together. In some embodiments, the human-readable extended interval service recommendation is provided to a user, such as an operator of the engine system 100 and/or a service technician.

In some embodiments, at process 312, the at least one processing circuit 242 includes the first group of RUL values in the extended term service recommendation responsive to determining that each RUL value in the first group of RUL values is greater than the service interval threshold.

In some embodiments, at process 312, the at least one processing circuit 242 receives a first extended term group of RUL values responsive to determining that the second RUL value of the plurality of RUL values is greater than the service interval threshold. The extended term service recommendation further includes a second list of components that correspond to each RUL value in the first extended term group of RUL values.

The text summary includes information about a first service interval including which components need to be serviced during a first service interval and/or time values for the first service interval (e.g., engine run time until the first service interval and/or approximate dates for the first service interval determined based on a current time and the duty cycle of the engine system 100). The text summary describes information about a second and/or subsequent service intervals including which components need to be serviced during each subsequent service interval and/or time values for the subsequent service intervals (e.g., engine run time until the subsequent service intervals and/or approximate dates for the subsequent service intervals determined based on a current time and the duty cycle of the engine system 100).

In some embodiments, the text summary includes information about components that do not need to be serviced during the extended interval. For example, the text summary can indicate which components do not need to be serviced within the second threshold (e.g., 500 engine hours, 500 genset hours, etc.). Beneficially, providing this information to a user avoids premature repair and/or replacement of components before end of a useful life based on the specific operation, duty cycle, application, etc.

In some embodiments, generating the human-readable extended term service recommendation includes generating a document including one or more fields that are populated dynamically based on extended interval optimization procedure described herein. The fields include an identifier of the engine 110 or engine system 100, a report generation date, a current number of engine hours or genset hours, and the text summary of the extended term service recommendation. The computing system 240 is configured to dynamically populate the fields based on the extended interval optimization procedure chosen at process 310 and/or other data received from the engine system 100, such as the engine identifier, sensor data, metadata, or other information described herein.

At process 314, the computing system 240 generates a human-readable summary of near-term and extended interval service recommendations, referred to herein as the coordinated service recommendation. For example, the computing system 240 is configured to generate a coordinated service recommendation by dynamically populating one or more fields of the coordinated service recommendation based on the near-term service recommendation and the extended term service recommendation. More specifically, the computing system 240 is configured to combine the near-term and extended interval service recommendations into a summary service recommendation and provide the summary service recommendation to a user. In some embodiments, dynamically populating the one or more fields of the coordinated service recommendation includes populating a degradation field with the degradation value. In some embodiments, the coordinated service recommendation includes one or both of the near-term service recommendation or the extended interval service recommendation. In some embodiments, the computing system 240 is configured to populate the one or more fields with an ordered list of engine systems of the plurality of engine systems according to the priority value.

When the coordinated service recommendation includes both the near-term service recommendation and the extended interval service recommendation combining the near-term and extended interval service recommendations into a summary service recommendation reduces the number of transmissions made by the computing system 240 by providing a single, combine summary of the service recommendations. In some embodiments, the computing system 240 is configured to provide the coordinated service recommendation to a user device. For example, the coordinated service recommendation or recommendation is provided to a user device by a message and/or an interface of a mobile application. The message is provided by a messaging service, such as an email or text message, and includes a link to a web page or document and/or a downloadable document.

In some embodiments, the computing system 240 is configured to provide the near-term service recommendation and the extended interval service recommendation separately, such that the service recommendation includes only one of the near-term service recommendation and the extended interval service recommendation. Beneficially, when the computing system 240 provides the near-term service recommendation and the extended interval service recommendation separately, a user (e.g., a fleet operator or owner, a technician, etc.) can quickly see what needs immediate attention in the near-term service recommendation and gain a holistic view of engine health, upcoming service events, and/or a need to order parts for a service event by viewing the extended interval service recommendation.

In some embodiments, the computing system 240 is configured to provide the coordinated service recommendation in a password protected file, such as a password protected email, a password protected document, etc. The computing system 240 is also configured to provide an interface to provide the password, such as a web interface where a user can log into a user account or otherwise input the password, an input field that is configured to receive the password, etc. The computing system 240 is configured to disable password protection of the password protected file, responsive to authenticating the password input. In some embodiments, the computing system 240 is configured to provide the coordinated service recommendation to a specific user device. In some embodiments, the computing system 240 receives a request for the coordinated service recommendation from the specific user device and provides the coordinated service recommendation to the specific user device. In this way, the computing system 240 mitigates against fraud or other unauthorized access to the coordinated service recommendation.

In an example embodiment, the computing system 240 is configured to provide the service recommendation in a password protected file. The computing system 240 is also configured to provide an interface configured to receive a password input to the user device. The computing system 240 is also configured to disable password protection of the password protected file, responsive to authenticating the password input.

In some embodiments, generating the human-readable coordinated service recommendation or recommendation includes generating a document including one or more fields that are populated dynamically based on the near-term service recommendation and the extended interval service recommendation. The fields include an identifier of the engine 110 or engine system 100, a report generation date, a current number of engine hours or genset hours, a text summary of the near-term service recommendation and a text summary of the extended interval service recommendation. The computing system 240 is configured to dynamically populate the fields based on the near-term service recommendation and the extended interval service recommendation. In some embodiments, the computing system 240 is configured to dynamically populate the fields based on other data received from the engine system 100, such as the engine identifier, sensor data, metadata, or other information described herein. Examples of the coordinated service recommendation as shown in FIGS. 8-11.

In an example embodiment, the service recommendation generation circuit 250 is configured to determine a coordinated service recommendation for servicing the spark plugs 116 of the engine system 100. The service recommendation generation circuit 250 receive a RUL value for each spark plug 116 and/or other data corresponding to the engine system 100, such as a duty cycle, which can include a run time of the engine 110.

The service recommendation generation circuit 250 is configured to determine that a near-term service event is required based on determining that a minimum RUL value of the RUL values for the spark plugs is less than a threshold value. The threshold value can be determined based on a distance of a repair site to a parts distributor, a part availability at the part distributor, a distance of the system to the repair site, etc. Responsive to determining that the near-term service event is required, the service recommendation generation circuit 250 is configured to generate and provide a notification to a user (e.g., a system operator or a repair technician) indicating that the near-term service event is required. The notification can include a user interface having a chart containing information about spark plugs requiring servicing in the short term. Example user interfaces are described herein with respect to FIGS. 8-11.

The service recommendation generation circuit 250 is configured to determine that a near-term service event is not required based on determining that a minimum RUL value of the RUL values for the spark plugs is greater than the threshold value. Responsive to determining that the near-term service event is not required, the service recommendation generation circuit 250 is configured to determine a coordinated service recommendation using any of the above described methods. Responsive to determining the coordinated service recommendation, the service recommendation generation circuit 250 is configured to generate and provide a notification to a user (e.g., a system operator or a repair technician) indicating coordinated service recommendation. The notification includes a user interface having a chart containing information about when the spark plugs 116 are expected to be serviced based on the coordinated service recommendation.

In some embodiments, if the confidence in the received RUL values is below a predetermined threshold (e.g., less than 95%, less than 90%, etc.) the service recommendation generation circuit 250 is configured to indicate low confidence in recommended service intervals on the coordinated service recommendation. In some embodiments, the service recommendation generation circuit 250 is configured to continuously update the coordinated service recommendation as confidence in the received RUL values increases.

In some embodiments, the notification includes additional information. For example, the notification can include an automatically generated, human-readable summary of the coordinated service recommendation. Example user interfaces are described herein with respect to FIGS. 8-11.

In an example embodiment, the computing system 240, or a component thereof, is configured to generate a coordinated service recommendation. For example, the computing system 240 is configured to receive system data corresponding to an engine system. The system data includes a plurality of remaining useful life (RUL) values. Each RUL value of the plurality of RUL values associated with a component or system of the engine system. The computing system 240 is configured to determine that a first RUL value of the plurality of RUL values is less than a service interval threshold. The computing system 240 is configured to generate a near-term service recommendation that includes a first component that correspond to the first RUL value. The computing system 240 is configured to determine that a second RUL value of the plurality of RUL values is greater than the service interval threshold. The computing system 240 is configured to generate an extended term service recommendation that includes a second component that corresponds to the second RUL value. The computing system 240 is configured to generate a coordinated service recommendation by dynamically populating one or more fields of the coordinated service recommendation based on the near-term service recommendation and the extended term service recommendation. The computing system 240 is configured to provide the coordinated service recommendation to a user device. For example, the computing system 240 is configured to provide one or more of the user interfaces shown in FIGS. 8-11.

In some embodiments, the computing system 240 is configured to generate a downtime prediction based on a downtime value of the second component. In these embodiments, the extended term service recommendation includes the downtime prediction.

In some embodiments, the computing system 240 is configured to receive a first near-term group of RUL values responsive to determining that the first RUL value is less than or equal to the service interval threshold. In these embodiments, the near-term service recommendation includes a first list of components that correspond to each RUL value in the first near-term group of RUL values.

In some embodiments, the computing system 240 is configured to receive a first extended term group of RUL values responsive to determining that a second RUL value of the plurality of RUL values is greater than the service interval threshold, wherein the extended term service recommendation further includes a second list of components that correspond to each RUL value in the first extended term group of RUL values.

FIG. 8 is an illustration of a first human-readable coordinated service recommendation 500, displayable on a user interface, according to an example embodiment. The first human-readable coordinated service recommendation 500 can include a summary of system data shown as an engine identifier 502, an indication of when the report was generated 504, an indication of a time the engine 110 has been running 506, and a text summary 508 of the coordinated service recommendation. The text summary 508 can be automatically generated by the computing system 240 based on generating the coordinated service recommendation. As shown in FIG. 8, the text summary 508 can indicate that insufficient data has been acquired to generate a coordinated service recommendation. Beneficially, the indication that insufficient data has been acquired to generate a coordinated service recommendation enables a user to attempt to resolve an issue that caused the insufficient data.

FIG. 9 is an illustration of a second human-readable coordinated service recommendation 510, displayable on a user interface, according to an example embodiment. The second human-readable coordinated service recommendation 510 can include a summary of system data shown as an engine identifier 512, an indication of when the report was generated 514, an indication of a time the engine 110 has been running 516, and a text summary 518 of the coordinated service recommendation. The text summary 518 can be automatically generated by the computing system 240 based on generating the coordinated service recommendation. As shown in FIG. 9, the text summary 518 can indicate that no service event is needed within the next 500 engine hours or genset hours, and an approximate time for the 500 engine hours or genset hours (e.g., 3 weeks). Beneficially, the indication that no service event is needed enables a user to continue equipment operation and avoid premature servicing of components before end of useful life.

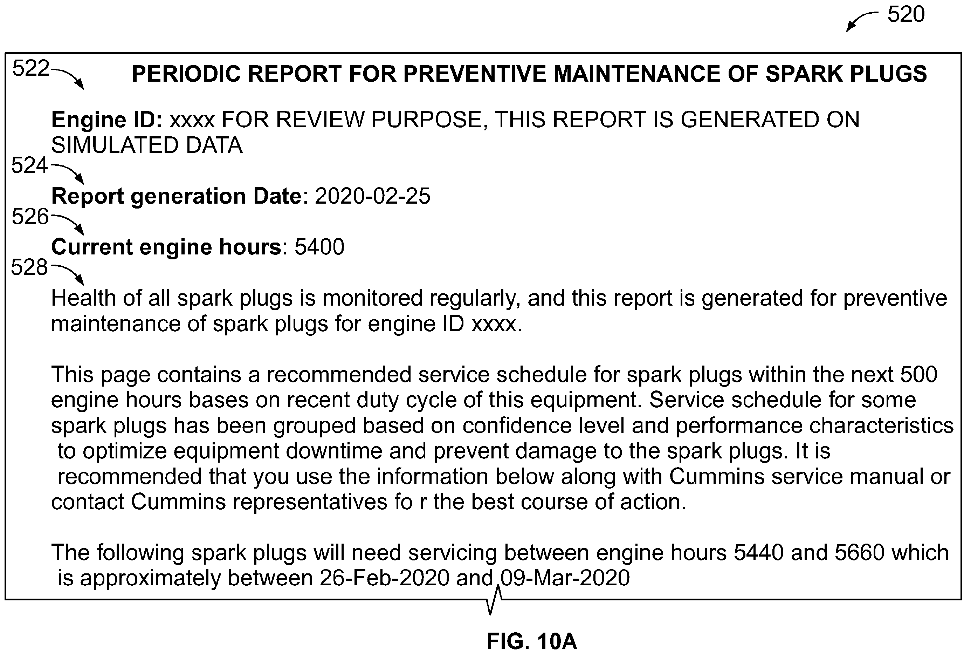

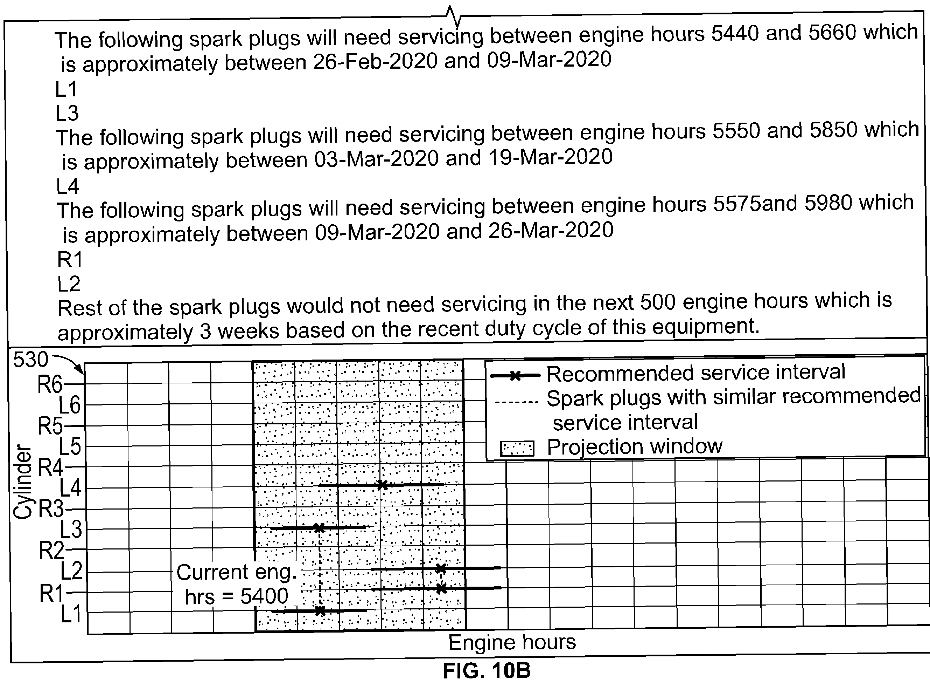

FIGS. 10A and 10B are illustrations of a third human-readable coordinated service recommendation 520, displayable on a user interface, according to an example embodiment. The third human-readable coordinated service recommendation 520 can include a summary of system data shown as an engine identifier 522, an indication of when the report was generated 524, an indication of a time the engine 110 has been running 526, and a text summary 528 of the coordinated service recommendation. The text summary 528 can be automatically generated by the computing system 240 based on generating the coordinated service recommendation. As shown in FIGS. 10A and 10B, the text summary 528 can indicate time values for when certain components need servicing and/or an indication of which components do not require servicing within the next 500 engine hours or genset hours.

As shown in FIGS. 10A and 10B, the third human-readable coordinated service recommendation 520 can include a graph 530 that depicts a service interval time for a number of components. As shown, the service recommendation generation circuit 250 recommends servicing a first component and a second component during a first service interval 532, the service recommendation generation circuit 250 recommends servicing a third component during a second service interval 534, and the service recommendation generation circuit 250 recommends servicing a fourth component and a fifth component during a third service interval 536. As shown, the cross marks indicate RUL in terms of equipment run time. Error bars are also shown. The error bars may indicate an error of the RUL value received by the computing system 240. As described herein, the computing system 240 is configured to use a model (e.g., a machine learning model) to group the components as shown in FIGS. 10A and 10B.

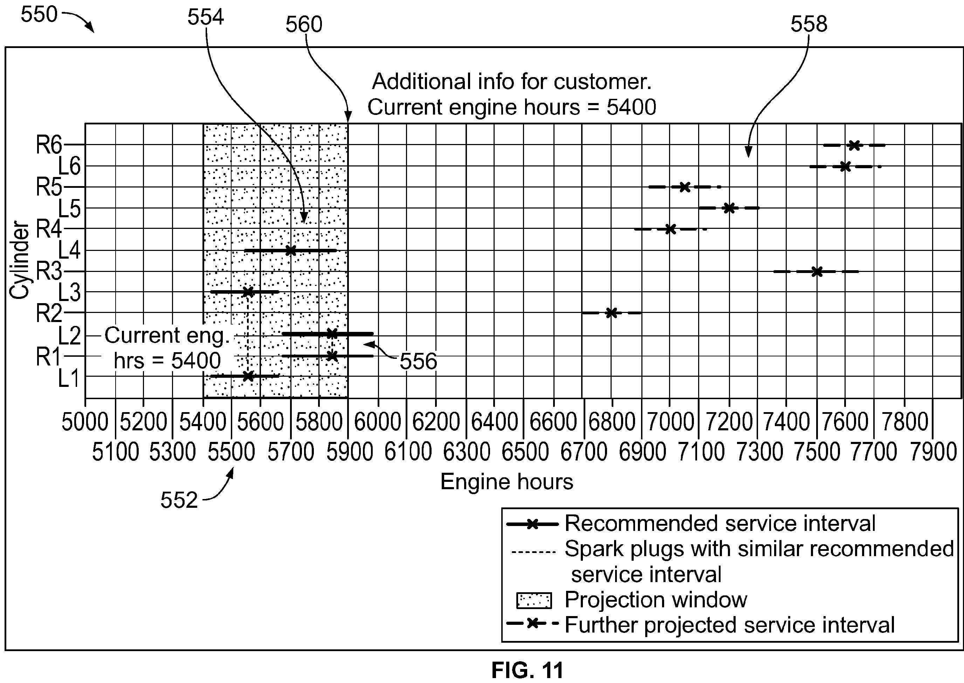

FIG. 11 is an illustration of another human-readable coordinated service recommendation 520, displayable on a user interface, according to an example embodiment. The human-readable coordinated service recommendation can include a graph 550 that depicts a service interval time for one or more components. As shown, the service recommendation generation circuit 250 recommends servicing a first component and a second component having similar RUL values that are less than a first service interval threshold 552 during a first service event. The service recommendation generation circuit 250 recommends servicing a third component having a RUL value that is greater than the first service interval threshold 552 and less than a second service interval threshold 554 during a second service event. The service recommendation generation circuit 250 recommends servicing a fourth component and a fifth component having similar RUL values that are greater than the second service interval threshold 554 and less than the third service interval threshold 556 during a third service event. The graph 550 also includes an extended view of the service recommendation. The extended view includes a set of service interval values 558 that occur outside (e.g., after) a predetermined projection window. The predetermined projection window is defined between a current time (e.g., a current value of engine hours or genset hours) and a predetermined time in the future (e.g., 200 engine hours or genset hours in the future). Beneficially, the extended view showing the set of service interval values 558 enables a user to view and plan for upcoming service events. For example, a user can pre-order parts which are critical for the operation of the engine system 100, frequently degrade, degrade rapidly, and/or are in high demand. The extended view beneficially enables technicians to make better decisions to not service all components of the engine system 100 at the same time as might have been done conventionally, and rather to use the components to the end of their useful life, thus reducing downtime and reducing the cost of a service event.

The disclosure is described above with reference to drawings. These drawings illustrate certain details of specific embodiments that implement the systems and methods and programs of the present disclosure. However, describing the disclosure with drawings should not be construed as imposing on the disclosure any limitations that may be present in the drawings. The present disclosure contemplates methods, systems and program products on any machine-readable media for accomplishing its operations. The embodiments of the present disclosure may be implemented using an existing computer processor, or by a special purpose computer processor incorporated for this or another purpose or by a hardwired system. No claim element herein is to be construed under the provisions of 35 U.S.C. § 112, sixth paragraph, unless the element is expressly recited using the phrase "means for." Furthermore, no element, component or method step in the present disclosure is intended to be dedicated to the public, regardless of whether the element, component or method step is explicitly recited in the claims.

As noted above, embodiments within the scope of the present disclosure include program products comprising machine-readable storage media for carrying or having machine-executable instructions or data structures stored thereon. Such machine-readable storage media can be any available media that can be accessed by a computer or other machine with a processor. By way of example, such machine-readable storage media can include RAM, ROM, EPROM, EEPROM, CD ROM or other optical disk storage, magnetic disk storage or other magnetic storage devices, or any other medium which can be used to carry or store desired program code in the form of machine-executable instructions or data structures and which can be accessed by a computer or other machine with a processor. Combinations of the above are also included within the scope of machine-readable storage media. Machine-executable instructions include, for example, instructions and data which cause a computing device or machine to perform a certain function or group of functions. Machine or computer-readable storage media, as referenced herein, do not include transitory media (i.e., signals in space).

Embodiments of the disclosure are described in the general context of method steps which may be implemented in one embodiment by a program product including machine-executable instructions, such as program code, for example, in the form of program modules executed by machines in networked environments. Generally, program modules include routines, programs, objects, components, data structures, etc., that perform particular tasks or implement particular abstract data types. Machine-executable instructions, associated data structures, and program modules represent examples of program code for executing steps of the methods disclosed herein. The particular sequence of such executable instructions or associated data structures represent examples of corresponding acts for implementing the functions described in such steps.

Embodiments of the present disclosure may be practiced in a networked environment using logical connections to one or more remote computers having processors. Logical connections may include a local area network (LAN) and a wide area network (WAN) that are presented here by way of example and not limitation. Such networking environments are commonplace in office-wide or enterprise-wide computer networks, intranets and the Internet and may use a wide variety of different communication protocols. Those skilled in the art will appreciate that such network computing environments will typically encompass many types of computer system configurations, including personal computers, handheld devices, multiprocessor systems, microprocessor-based or programmable consumer electronics, network PCs, servers, minicomputers, mainframe computers, and the like. Embodiments of the disclosure may also be practiced in distributed computing environments where tasks are performed by local and remote processing devices that are linked (either by hardwired links, wireless links, or by a combination of hardwired or wireless links) through a communications network. In a distributed computing environment, program modules may be located in both local and remote memory storage devices.

An exemplary system for implementing the overall system or portions of the disclosure might include a computing device that includes, for example, a processing unit, a system memory, and a system bus that couples various system components including the system memory to the processing unit. The system memory may include read only memory (ROM) and random access memory (RAM) or other non-transitory storage medium. The computer may also include a magnetic hard disk drive for reading from and writing to a magnetic hard disk, a magnetic disk drive for reading from or writing to a removable magnetic disk, and an optical disk drive for reading from or writing to a removable optical disk such as a CD ROM or other optical media. The drives and their associated machine-readable media provide nonvolatile storage of machine-executable instructions, data structures, program modules, and other data for the computer.

It should be noted that although the flowcharts provided herein show a specific order of method steps, it is understood that the order of these steps may differ from what is depicted. Also two or more steps may be performed concurrently or with partial concurrence. Such variation will depend on the software and hardware systems chosen and on designer choice. It is understood that all such variations are within the scope of the disclosure. Likewise, software and web implementations of the present disclosure could be accomplished with standard programming techniques with rule based logic and other logic to accomplish the various database searching steps, correlation steps, comparison steps and decision steps. It should also be noted that the word "component" as used herein and in the claims is intended to encompass implementations using one or more lines of software code, and/or hardware implementations, and/or equipment for receiving manual inputs.

The foregoing description of embodiments of the disclosure have been presented for purposes of illustration and description. It is not intended to be exhaustive or to limit the disclosure to the precise form disclosed, and modifications and variations are possible in light of the above teachings or may be acquired from practice of the disclosure. The embodiments were chosen and described in order to explain the principals of the disclosure and its practical application to enable one skilled in the art to utilize the disclosure in various embodiments and with various modifications as are suited to the particular use contemplated.

## Claims

1. A method comprising:

    receiving, by at least one processing circuit of a computing system, system data corresponding to an engine system, the system data comprising a plurality of remaining useful life (RUL) values, each RUL value of the plurality of RUL values associated with a component or system of the engine system;
    determining, by the at least one processing circuit, that a first RUL value of the plurality of RUL values is less than a service interval threshold;
    generating, by the at least one processing circuit, a near-term service recommendation comprising a first component that corresponds to the first RUL value;
    determining, by the at least one processing circuit, that a second RUL value of the plurality of RUL values is greater than the service interval threshold;
    generating, by the at least one processing circuit, an extended term service recommendation comprising a second component that corresponds to the second RUL value;
    generating, by the at least one processing circuit, a coordinated service recommendation by dynamically populating one or more fields of the coordinated service recommendation based on the near-term service recommendation and the extended term service recommendation; and
    providing, by the at least one processing circuit, the coordinated service recommendation to a user device.

2. The method of claim 1, further comprising:

    receiving, by the at least one processing circuit, duty cycle information associated with a third component, the third component corresponding to a third RUL value of the plurality of RUL values, the duty cycle information comprising a run time of the third component;

determining, by the at least one processing circuit, a total life value for the third component based on an aggregate of the run time and the third RUL value; and

determining, by the at least one processing circuit, a degradation value up to a planned service event based on the total life value relative to the third RUL value;

wherein dynamically populating the one or more fields of the coordinated service recommendation includes populating a degradation field with the degradation value.

3. The method of claim 2, further comprising:

receiving, by the at least one processing circuit, information regarding the planned service event comprising an engine hour value corresponding to the planned service event, a list of components planned to be serviced during the planned service event, and a predicted downtime during the planned service event, the predicted downtime based on the list of components; and

generating, by the at least one processing circuit, a first group of RUL values of the plurality of RUL values, each RUL value of the first group of RUL values within a predetermined threshold of the engine hour value, the first group of RUL values including at least the third RUL value.

4. The method of claim 3, further comprising at least one of:

- including the first group of RUL values in the near-term service recommendation responsive to determining that each RUL value in the first group of RUL values is less than the service interval threshold, and
- including the first group of RUL values in the extended term service recommendation responsive to determining that each RUL value in the first group of RUL values is greater than the service interval threshold.

5. The method of claim 3, wherein the dynamically populating the one or more fields of the coordinated service recommendation includes populating a recommendation field with a recommendation to service a set of components, the set of components comprising at least the third component.

6. The method of any one of claims 1 to 5, further comprising generating, by the at least one processing circuit, a downtime prediction based on a downtime value of the second component, wherein the extended term service recommendation further includes the downtime prediction.

7. The method of any one of claims 1 to 6, further comprising receiving, by the at least one processing circuit, at least one of:

- a first near-term group of RUL values responsive to determining that the first RUL value is less than or equal to the service interval threshold, wherein the near-term service recommendation further comprises a first list of components that correspond to each RUL value in the first near-term group of RUL values; and
- a first extended term group of RUL values responsive to determining that the second RUL value of the plurality of RUL values is greater than the service interval threshold, wherein the extended term service recommendation further comprises a second list of components that correspond to each RUL value in the first extended term group of RUL values.

8. A computing system comprising:

a processing circuit having one or more processors and memory storing instructions that, when executed by the one or more processors, cause the one or more processors to perform operations comprising:

receiving system data corresponding to a plurality of engine systems, the system data comprising one or more remaining useful life (RUL) values;

determining a priority value for each of the plurality of engine systems;

generating a service recommendation by dynamically populating one or more fields of the service recommendation, the one or more fields comprising an ordered list of engine systems of the plurality of engine systems according to the priority value; and

providing the service recommendation to a user device.

9. The computing system of claim 8, wherein generating the service recommendation further comprises populating the one or more fields of the service recommendation with an indication of parts needed to complete a service event.

**10.** The computing system of claim 8 or claim 9, wherein a first priority value for a first engine system of the plurality of engine systems is based on:

an age of first engine system;
a total run time for a first component of the first engine system; and
a RUL value for the first component of the first engine system;
and optionally wherein the first priority value is further based on a second priority value of a second engine system, the second engine system located proximate the first engine system, and a difference between the first priority value and the second priority value at or below a predetermined threshold.

**11.** The computing system of any one of claims 8 to 10, wherein the operations further comprise determining a predicted downtime value for a first engine system of the plurality of engine systems based on predicted downtimes of engine systems having higher priority values than the first engine system;
and optionally wherein the predicted downtime value is further based on a set of components that are recommended to be serviced, a travel time for the first engine system, a travel time for a technician, and a delivery time for service parts, such that the predicted downtime value for the first engine system is an aggregate of one or more of a service time for the set of components, the travel time for the first engine system, the travel time for the technician, the delivery time for service parts, and the predicted downtimes of engine systems having a higher priority value than the first engine system.

**12.** A non-transitory computer-readable media storing instructions that, when executed by one or more processors of a processing circuit, cause the one or more processors to perform operations comprising:

receiving system data corresponding to an engine system, the system data comprising a plurality of remaining useful life (RUL) values, each RUL value of the plurality of RUL values associated with a component or system of the engine system;
determining that a first RUL value of the plurality of RUL values is less than a service interval threshold;
generating a near-term service recommendation comprising a first component that corresponds to the first RUL value;
determining that a second RUL value of the plurality of RUL values is greater than the service interval threshold;
generating an extended term service recommendation comprising a second component that corresponds to the second RUL value;
generating a coordinated service recommendation by dynamically populating one or more fields of the coordinated service recommendation based on the near-term service recommendation and the extended term service recommendation; and
providing the coordinated service recommendation to a user device.

**13.** The non-transitory computer-readable media of claim 12, wherein the operations further comprise:

receiving duty cycle information associated with a third component, the third component corresponding to a third RUL value of the plurality of RUL values, the duty cycle information comprising a run time of the third component;
determining a total life value for the third component based on an aggregate of the run time and the third RUL value; and
determining, by the at least one processing circuit, a degradation value up to a planned service event based on the total life value relative to the third RUL value;
wherein dynamically populating the one or more fields of the coordinated service recommendation includes populating a degradation field with the degradation value.

**14.** The non-transitory computer-readable media of claim 13, wherein the operations further comprise:

receiving information regarding the planned service event comprising an engine hour value corresponding to the planned service event, a list of components planned to be serviced during the planned service event, and a predicted downtime during the planned service event, the predicted downtime based on the list of components; and
generating a first group of RUL values of the plurality of RUL values, each RUL value of the first group of RUL values within a predetermined threshold of the engine hour value, the first group of RUL values including at least the third RUL value.

**15.** The non-transitory computer-readable media of claim 14, wherein the operations further comprise at least one of:

- including the first group of RUL values in the near-term service recommendation responsive to determining that each RUL value in the first group of RUL values is less than the service interval threshold; and
- including the first group of RUL values in the extended term service recommendation responsive to determining that each RUL value in the first group of RUL values is greater than the service interval threshold.

**FIG. 1**

FIG. 2

FIG. 3

EP 4 439 216 A1

**FIG. 4**

EP 4 439 216 A1

400

Receive RUL of component(s) — 402

Receive future planned service event information — 403

Determine RUL and/or degradation percentage up to the planned service event — 404

Recommend a group of components to be serviced at the planned service event — 405

Determine change in downtime for planned service event based on recommended group of components — 406

To 312

**FIG. 5**

410

Receive system data including RUL, component age, duty cycle, etc. — 412

Receive site data including location, system travel time, technician travel time, etc. — 414

Receive downtime perferences — 416

Determine servicing order for a fleet — 418

To 312

FIG. 6

FIG. 7

EP 4 439 216 A1

**PERIODIC REPORT FOR PREVENTIVE MAINTENANCE OF SPARK PLUGS**

502 — **Engine ID:** 37279009

504 — **Report generation date:** 2020-09-08

506 — **Current engine hours:** 5538.0

508 — Health of all spark plugs is monitored regularly, and this report is generated for preventive maintenance of spark plugs for engine ID 37279009.

Insufficient equipment data is available during the analysis window. As the equipment continues to operate, health of all spark plugs will be monitored and further recommendations for servicing the spark plugs will be provided periodically.

**FIG. 8**

**PERIODIC REPORT FOR PREVENTIVE MAINTENANCE OF SPARK PLUGS**

512 — **Engine ID:** 37279009

514 — **Report generation date:** 2020-10-13

516 — **Current engine hours:** 6016.2

518 — Health of all spark plugs is monitored regularly, and this report is generated for preventive maintenance of spark plugs for engine ID 37279009.

Spark plug health checks are complete. No spark plugs are recommended for service in the next 500 engine hours which is approximately 3 weeks based on recent duty cycle of this equipment.

**FIG. 9**

520

**PERIODIC REPORT FOR PREVENTIVE MAINTENANCE OF SPARK PLUGS**

**Engine ID:** xxxx FOR REVIEW PURPOSE, THIS REPORT IS GENERATED ON SIMULATED DATA

**Report generation Date:** 2020-02-25

**Current engine hours:** 5400

Health of all spark plugs is monitored regularly, and this report is generated for preventive maintenance of spark plugs for engine ID xxxx.

This page contains a recommended service schedule for spark plugs within the next 500 engine hours bases on recent duty cycle of this equipment. Service schedule for some spark plugs has been grouped based on confidence level and performance characteristics to optimize equipment downtime and prevent damage to the spark plugs. It is recommended that you use the information below along with Cummins service manual or contact Cummins representatives fo r the best course of action.

The following spark plugs will need servicing between engine hours 5440 and 5660 which is approximately between 26-Feb-2020 and 09-Mar-2020

**FIG. 10A**

EP 4 439 216 A1

The following spark plugs will need servicing between engine hours 5440 and 5660 which is approximately between 26-Feb-2020 and 09-Mar-2020

L1

L3

The following spark plugs will need servicing between engine hours 5550 and 5850 which is approximately between 03-Mar-2020 and 19-Mar-2020

L4

The following spark plugs will need servicing between engine hours 5575and 5980 which is approximately between 09-Mar-2020 and 26-Mar-2020

R1

L2

Rest of the spark plugs would not need servicing in the next 500 engine hours which is approximately 3 weeks based on the recent duty cycle of this equipment.

**FIG. 10B**

FIG. 11

EP 4 439 216 A1

Europäisches
Patentamt

European
Patent Office

Office européen
des brevets

**EUROPEAN SEARCH REPORT**

Application Number

EP 24 16 2175

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | WO 2022/072522 A1 (CUMMINS INC [US]) 7 April 2022 (2022-04-07) * abstract * * paragraphs [0020], [0022], [0026], [0040], [0041], [0047] * | 1-15 | INV. G05B23/02 |
| A | US 2020/096985 A1 (WENZEL MICHAEL J [US] ET AL) 26 March 2020 (2020-03-26) * abstract * * paragraphs [0009], [0010], [0269] * | 1-15 | |

TECHNICAL FIELDS
SEARCHED      (IPC)

G05B
G06Q

The present search report has been drawn up for all claims

| Place of search | Date of completion of the search | Examiner |
|---|---|---|
| Munich | 25 July 2024 | Moltenbrey, Michael |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

.........................................................................

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 24 16 2175

25-07-2024

| Patent document cited in search report | | Publication date | Patent family member(s) | | Publication date |
|---|---|---|---|---|---|
| WO 2022072522 | A1 | 07-04-2022 | CN   116324638 A | | 23-06-2023 |
| | | | EP     4222561 A1 | | 09-08-2023 |
| | | | US  2023237445 A1 | | 27-07-2023 |
| | | | WO  2022072522 A1 | | 07-04-2022 |
| US 2020096985 | A1 | 26-03-2020 | NONE | | |

For more details about this annex : see Official Journal of the European Patent Office, No. 12/82

**REFERENCES CITED IN THE DESCRIPTION**

**Patent documents cited in the description**

- US 63451171